# EUROPÄISCHE PATENTSCHRIFT

(11) **EP 3 482 185 B1**
(45) Veröffentlichungstag und Bekanntmachung des Hinweises auf die Patenterteilung: **01.04.2020**
(21) Anmeldenummer: 17736657.2
(22) Anmeldetag: 05.07.2017
(51) Int. Cl.: G01M 17/007

(54) **DUMMY-FAHRZEUG ZUM DURCHFÜHREN VON TESTS FÜR EIN FAHRERASSISTENZSYSTEM**
DUMMY VEHICLE FOR CARRYING OUT TESTS FOR A DRIVER ASSISTANCE SYSTEM
VÉHICULE DE TEST POUR LA RÉALISATION DE TESTS POUR UN SYSTÈME D'AIDE À LA CONDUITE

(30) Priorität: 07.07.2016 DE 102016112518
(43) Veröffentlichungstag der Anmeldung: 15.05.2019
(73) Patentinhaber: 4Activesystems GmbH, 8772 Traboch (AT)
(72) Erfinder: HAFELLNER, Reinhard, 8724 Spielberg (AT); FRITZ, Martin, 8723 Kobenz (AT)
(74) Vertreter: Dilg, Haeusler, Schindelmann Patentanwaltsgesellschaft mbH
(86) Internationale Anmeldenummer: PCT/EP2017/066810
(87) Internationale Veröffentlichungsnummer: WO 2018/007459

(56) Entgegenhaltungen:
- DE-B3-102008 008 665
- JP-A- 2012 137 299

## Beschreibung

### Technisches Gebiet

Die vorliegende Erfindung betrifft ein Dummy-Fahrzeug und ein Verfahren zum Durchführen von Tests für ein Fahrerassistenzsystem.

### Hintergrund der Erfindung

In der modernen Fahrzeugtechnik kommen mehr und mehr Assistenzsysteme zum Einsatz, welche aktiv die Umgebung eines Fahrzeugs überwachen und passiv oder aktiv in die Steuerung des Fahrzeugs eingreifen. Assistenzsysteme müssen daher vollumfänglichen Tests unterzogen werden, um Fehleinschätzungen der Assistenzsysteme zu unterbinden.

Zum Testen von modernen Assistenzsystemen werden Kollisionen oder kollisionsnahe Situationen zwischen dem zu testenden Fahrzeug und einem Testobjekt, beispielsweise eine Fahrzeugattrappe oder ein Dummy, herbeigeführt. Für eine Kollision zwischen einem Fahrzeug und einem Testobjekt wird beispielsweise das Fahrzeug oder das Testobjekt an einer bestimmten Position ruhend angeordnet oder auch einer Plattform fahrend bewegt und der Kollisionspartner auf eine bestimmte Differenzgeschwindigkeit beschleunigt. Um eine realitätsnahe Kollisionssituation herbeizuführen, wie beispielsweise eine Kollision zweier Fahrzeuge oder eines Fahrzeugs mit einer Person im Straßenverkehr, wird das Fahrzeug wie auch das Testobjekt in Bewegung versetzt, um eine Kollision oder eine kollisionsnahe Situation zu erzeugen. Dabei können insbesondere Fahrerassistenzsysteme realitätsnah getestet werden (DE102008008665).

Zum Testen der Fahrerassistenzsysteme ist eine häufige Wiederholung der Tests notwendig. Gerade der Aufbau einer Fahrzeugattrappe bei wiederholten Testmanövern ist ein erheblicher Kostenfaktor bei solchen Tests für Fahrerassistenzsysteme. Eine Zerstörung der Fahrzeugattrappe bei Kollisionen verursacht somit Kosten, insbesondere bei häufiger Wiederholung von Kollisionsversuchen.

### Darstellung der Erfindung

Es ist eine Aufgabe der vorliegenden Erfindung, ein Dummy-Fahrzeug bereitzustellen, welches für einen wiederholten Einsatz in Tests für Fahrerassistenzsysteme geeignet ist.

Diese Aufgabe wird mit einem Dummy-Fahrzeug zum Durchführen von Tests für Fahrerassistenzsysteme sowie mit einem Verfahren zum Durchführen von Tests für Fahrerassistenzsysteme mit einem Dummy-Fahrzeug gemäß den unabhängigen Ansprüchen gelöst.

Gemäß einem ersten Aspekt der vorliegenden Erfindung wird ein Dummy-Fahrzeug (d.h. eine Fahrzeugattrappe bzw. Fahrzeug-Target) zum Durchführen von Tests (insbesondere Kollisionstests oder kollisionsnahe Tests) für ein Fahrerassistenzsystem beschrieben. Das Dummy-Fahrzeug weist ein (z.B. elastisch) verformbares erstes Außenpaneel, welches zumindest teilweise ein Innenvolumen des Dummy-Fahrzeugs umgibt, und ein Öffnungselement, welches zumindest teilweise das Innenvolumen des Dummy-Fahrzeugs umgibt, wobei das Öffnungselement und das erste Außenpaneel eine selbstragende Einheit bilden. Das Öffnungselement ist lösbar mit dem ersten Außenpaneel derart verbunden, dass bei Einwirkens einer Aufprallkraft das Öffnungselement vom ersten Außenpaneel lösbar ist, sodass die selbstragende Einheit auflösbar ist und eine Verformung des Fahrzeugs bereitstellbar ist.

Das Öffnungselement ist insbesondere derart lösbar mit dem ersten Außenpaneel derart verbunden, dass bei Erhöhung eines Luftdrucks im Innenvolumen oder aufgrund einer mechanischen Verformung aufgrund einer Aufprallkraft des Dummy-Fahrzeugs das Öffnungselement vom ersten Außenpaneel lösbar ist, sodass ein Druckausgleich zwischen dem Innenvolumen und der Umgebung des Dummy-Fahrzeugs bereitstellbar ist.

Gemäß einem weiteren Aspekt der vorliegenden Erfindung wird ein Verfahren zum Durchführen von Tests für ein Fahrerassistenzsystem mit einem oben beschriebenen Dummy-Fahrzeug beschrieben.

Bei Tests für Fahrerassistenzsysteme werden beispielsweise ein Testfahrzeug mit einem Fahrerassistenzsystem getestet. Das Assistenzsystem weist beispielsweise Sensoren, wie beispielsweise Radarsensoren, auf, welche ein Hindernis, wie beispielsweise das oben beschriebene Dummy-Fahrzeug erkennen und entsprechend passiv oder aktiv mit dem Testfahrzeug kommunizieren. Bei solchen wird beispielsweise das Testfahrzeug auf eine Fahrzeugattrappe gemäß der vorliegenden Erfindung hinzu bewegt, wobei beide Fahrzeuge unterschiedliche Geschwindigkeiten aufweisen können. Bei Kollision des Testfahrzeugs mit der Fahrzeugattrappe entsteht eine Aufprallkraft. Das Testfahrzeug bewegt sich beispielsweise mit einer Geschwindigkeit von 10 km/h bis 100 km/h auf die Fahrzeugattrappe zu, sodass die entsprechende Aufprallkraft bei Kollision mit der Fahrzeugattrappe entsteht. Die Aufprallenergie, aus welcher die Aufprallkraft resultiert, kann beispielsweise in einem Bereich zwischen 10 kJ und 1000kJ liegen.

Die Fahrzeugattrappe gemäß der vorliegenden Erfindung ist beispielsweise ein Fahrzeug in der Form eines Personenkraftwagens oder eines Lastkraftwagens.

Das Testfahrzeug mit dem zu testen Assistenzsystem ist beispielsweise ein Kraftfahrzeug, ein PKW, ein Lkw oder ein Motorrad.

Das Dummy-Fahrzeug besteht aus mehreren Außenpaneelen, welche zusammen eine geschlossene Außenhülle des Dummy-Fahrzeugs beschreiben. Die Außenpaneele und das oder die Öffnungselement(e) umschließen ein Innenvolumen des Dummy-Fahrzeugs. Die Außenpaneele sind verformbar ausgebildet. Dies bedeutet, dass bei Aufprall des Dummy-Fahrzeugs mit einem anderen Testobjekt die Außenpaneele zerstörungsfrei verformt werden können. Ein Außenpaneel kann dabei an der Außenfläche, welche in Richtung der Umgebung des Dummy-Fahrzeugs gerichtet ist, in einer gewünschten Wagenfarbe lackiert werden. Insbesondere kann, wie weiter unten beschrieben, ein Außenpaneel und das oder die Öffnungselement(e) aus einem Schichtverbund bestehen, wobei eine Außenschicht eine gewünschte lackierte, insbesondere durchgefärbte, Außenschicht des Außenpaneels oder des das Öffnungselements darstellt. Insbesondere können die Außenpaneele elastisch verformbar sein und sich somit nach einem Aufprall, in welchem die Außenpaneele elastisch verformt werden, zurück in die Ausgangslage verformen. Ferner können die Außenpaneele zur realitätsnahen Simulation einer Fahrzeugkarosserie Metallgewebe aufweisen, um die Materialeigenschaften einer metallischen Fahrzeugkarosserie realitätsnah zu simulieren. Dies ist beispielsweise relevant bei Testung von Fahrerassistenzsystem mit Radarsensoren. Ferner weisen die verformbaren Außenpaneele und das oder die Öffnungselement(e) eine ausreichende Steifigkeit auf, sodass kein Vibrieren bzw. Flattern der Paneele aufgrund eines Fahrtwindes oder aufgrund von Bodenwellen bei Bewegung des Dummy-Fahrzeugs entsteht.

Aufgrund der Verformung des Dummy-Fahrzeugs nach einem Aufprall öffnet sich das Öffnungselement und löst damit die selbsttragende Struktur des Dummy-Fahrzeugs auf. Durch Auflösung der selbsttragenden Struktur sind die einzelnen Komponenten des Dummy-Fahrzeugs, wie beispielsweise die Außenpaneele und die Öffnungselemente relativ zueinander bewegbar (verformbar). Insbesondere die Außenpaneele bleiben nach Auflösung der selbsttragenden Struktur miteinander verbunden und können sich aufgrund einer flexiblen Verbindung relativ zueinander verformen. Das Öffnungselement kann nach dem Öffnen mit einem Bereich an dem entsprechenden Außenpaneel befestigt bleiben oder sich völlig von den Außenpaneelen lösen.

Gemäß einem weiteren Ausführungsbeispiel sind das Außenpaneel und das Öffnungselement bzw. Paneel, insbesondere das Dachpaneel, derart gekoppelt,
dass in einem geschlossenen Zustand, indem das Paneel und das Außenpaneel ein Druckausgleich zwischen dem Innenvolumen und der Umgebung des Dummy-Fahrzeugs unterbinden, das Außenpaneel und das Paneel eine selbsttragende Struktur ausbilden, und
dass in einem offenen Zustand, indem das Paneel und das Außenpaneel ein Druckausgleich zwischen dem Innenvolumen und der Umgebung des Dummy-Fahrzeugs bereitstellen, das Außenpaneel und das Paneel eine verformbare Struktur ausbilden.

Solange die selbstragende Struktur aus Außenpaneelen und Öffnungselementen geschlossen ist, ist das Dummy-Fahrzeug formstabil und z.B. windbeständig. Durch die Kollisionsenergie führt die Kraft oder der Überdruck zur Öffnung des Öffnungselements und die Struktur wird weich, weil die Steifigkeit bzw. die Verformbarkeit der Außenpaneelen einzeln wirkt und die Außenpaneele und Öffnungselemente relativ zueinander verformbar sind. Es findet somit ein Übergang der Struktursteifigkeit (d.h. der selbsttragenden Einheit) zu deutlich weicheren Paneel(Schalen-)steifigkeit statt.

Aufgrund der Verformung der einzelnen Außenpaneele nach einem Aufprall verändert sich das Innenvolumen des Dummy-Fahrzeugs, sodass es zu einem Überdruck oder einem Unterdruck kommen kann, welche Komponenten des Dummy-Fahrzeugs zerstören kann. Zudem kann ein entsprechender Unterdruck oder Überdruck die Simulationsergebnisse verfälschen, da eine Verformung der Außenpaneele relativ zueinander und des Öffnungselements unterdrückt werden, wenn kein Druckausgleich mit der Umgebung stattfindet. Aus diesem Grund ist das Öffnungselement derart lösbar mit dem Außenpaneel verbunden, dass eine solche Öffnung bereitgestellt wird. Bei Überschreitens beispielsweise eines Überdrucks von beispielsweise mehr als 0,01 bar bis 0,5 bar, löst sich das Öffnungselement, sodass eine Druckausgleichsverbindung zwischen dem Innenvolumen und der Umgebung des Dummy-Fahrzeugs vorliegt. Somit wird insbesondere Beschädigungen aufgrund ungünstiger Druckverhältnisse im Innenvolumen reduziert. Das Öffnungselement Paneel kann neben einem Dachpaneel, welches ein Dach eines Dummy-Fahrzeugs bildet, ebenfalls ein Bodenpaneel oder ein Seitenpaneel des Dummy-Fahrzeugs darstellen.

Gemäß einem weiteren Ausführungsbeispiel des Dummy- Fahrzeugs bildet das Öffnungselement ein Paneel, insbesondere ein Dachpaneel, aus. Gemäß einem weiteren Ausführungsbeispiel des Dummy-Fahrzeugs ist das Paneel verformbar (insbesondere elastisch verformbar) ausgebildet. Das Paneel kann beispielsweise aus dem unten beschriebenen Schichtverbund bestehen. Ferner kann das Paneel aus Kunststoff bestehen.

Gemäß einem weiteren Ausführungsbeispiel ist das Öffnungselement mit einem Sicherheitsreißverschluss gekoppelt ist. In einem Sicherheitsreißverschluss sind beispielsweise nach bestimmten Abständen kann, beispielsweise nach 50 Zentimeter, Unterbrechungselemente eingebracht, welche die Verzahnung des Reißverschluss stören. Somit kann eine gezielte Soll-Öffnung in dem Reißverschluss integriert werden, sodass bei Vorliegens eines bestimmten Drucks in dem Innenvolumen dieser öffnet.

Gemäß einem weiteren Ausführungsbeispiel ist das Öffnungselement mit einem Klettverschluss, einem Sicherheitsreißverschluss, einer Knopfverbindung und/oder einer Hakenverbindung gekoppelt.

Gemäß einer weiteren beispielhaften Ausführungsform weist das Dummy-Fahrzeug ein elastisch verformbares Stützpaneel auf, welches im Innenvolumen des Dummy-Fahrzeugs angeordnet ist. Das Stützpaneel weist einen ersten Koppelbereich und einen von dem ersten Koppelbereich beabstandeten zweiten Koppelbereich auf. Der erste Koppelbereich und der zweite Koppelbereich sind derart mit dem ersten Außenpaneel gekoppelt, dass bei Veränderung (insbesondere bei Verkürzung) eines ersten Abstands zwischen dem ersten Koppelbereich und dem zweiten Koppelbereich das Stützpaneel vorspannbar ist.

Gemäß dem Verfahren wird das Stützpaneel mittels Veränderns (insbesondere mittels Verkürzens) des ersten Abstands zwischen dem ersten Koppelbereich und dem zweiten Koppelbereich aufgrund einer Verformung des ersten Außenpaneels durch eine Kollision des Dummy-Fahrzeugs mit einem Testobjekt vorgespannt. Aufgrund der Vorspannung des Stützpaneels wird eine Ausgangsform des ersten Außenpaneels und des Stützpaneels wiederhergestellt.

In dem Innenvolumen des Dummy-Fahrzeugs sind elastisch verformbare Stützpaneele angeordnet. Ein elastisch verformbares Stützpaneel ist an einem entsprechenden Außenpaneel befestigt. Dabei ist das Stützpaneel mit einem ersten Koppelbereich und einem, mit einem ersten Abstand beabstandeten zweiten Koppelbereich an dem Außenpaneel befestigt. Der erste Koppelbereich und der zweite Koppelbereich des elastisch verformbaren Stützpaneels bilden beispielsweise Kantenbereiche des Stützpaneels.

Die Stützpaneele und die Außenpaneele sind dabei derart ausgebildet, dass jedes der Paneele selbsttragend ausgebildet ist. Insbesondere sind die Außenpaneele und die Stützpaneele derart steif ausgebildet, dass diese im gegenseitigen Verbund die selbsttragende Einheit, d.h. das Dummy-Fahrzeug, ausbilden. Diese selbsttragende Einheit kann beispielsweise auf dem Boden aufgestellt werden, ohne dass es zu weiteren Verformungen kommt. Mit anderen Worten bleibt insbesondere im unbelasteten Zustand, in welchem das Dummy-Fahrzeug auf dem Boden aufsteht, der erste Abstand bzw. allgemein die Abstände zwischen den Koppelbereichen konstant.

Ferner kann der Bodenbereich des Dummy-Fahrzeugs offen gelassen werden oder mittels einem weiteren Bodenpaneel oder mit einem Gewebe abgedeckt werden, sodass das Innenvolumen des Dummy-Fahrzeugs vollständig umhüllt ist.

Der Abstand zwischen dem ersten Koppelbereich und dem zweiten Koppelbereich ist der kürzeste Abstand zwischen den dichtest liegenden Punkten der beiden Koppelbereiche.

Unter dem Begriff "elastisch verformbar" wird verstanden, dass die Stützwand unter Einwirkung einer Aufprallkraft seine Form verändern kann und bei Wegfall der einwirkenden Aufprallkraft in ihre die Ursprungsform zerstörungsfrei zurückkehrt.

Das Stützpaneel ist dabei ein flächiges Element, welches eine deutlich größere Länge und Breite als Dicke aufweist. Das Stützpaneel kann beispielsweise in einer ebenen Fläche ausgebildet sein. Dies bedeutet, dass das Stützpaneel in einem unverformten und nicht vorgespannten Zustand innerhalb einer Ebene d.h. als gerades flächiges Element ausgebildet ist. In einer unten beschriebenen beispielhaften Ausführungsform kann das Stützpaneel in einem unverformten und nicht vorgespannten Zustand gewölbt vorliegen.

Das Stützpaneel kann beispielsweise aus in einer Sandwichbauweise oder als Schichtverbund, wie weiter unten detaillierter beschriebenen, ausgebildet sein. Das Stützpaneel besteht beispielsweise aus Kunststoff, insbesondere einem faserverstärkten, beispielsweise glasfaser- oder kohlefaserverstärktem, Kunststoff. Ferner kann das Stützpaneel aus einem Schaumstoff bestehen. Das Stützpaneel kann ein E-Modul von 0,01 bis 2 MPa aufweisen.

Bei einem Aufprall des Dummy-Fahrzeugs wirkt eine hohe Aufprallenergie auf die Außenpaneele. Diese beginnen sich zu verformen, um einerseits den Aufprallstoß abzufangen und andererseits um eine realitätsnahe Kollision mit realen Fahrzeugen zu simulieren. Aufgrund der Verformung der Außenpaneele verändern sich jeweils die Abstände (d.h. der erste Abstand wird verlängert oder verkürzt) zwischen dem ersten Koppelbereich und dem zweiten Koppelbereich. Dies führt wiederum zu einer Vorspannung des elastischen Stützpaneels. Nach dem Aufprall verformt sich das Stützpaneel zurück in seine Ausgangslage und drückt oder zieht den ersten Koppelbereich und den zweiten Koppelbereich in die Ursprungsform, sodass wiederum der erste Abstand zwischen dem ersten Koppelbereich und dem zweiten Koppelbereich vorliegt. Dabei wird wiederum das Außenpaneel in seine Ursprungsform gebracht und beispielsweise erneut gespannt.

Mit dem Dummy-Fahrzeug gemäß der vorliegenden Erfindung wird somit ein eine Fahrzeugattrappe geschaffen, welche einer Vielzahl von Kollisionsversuchen standhalten kann. Einerseits nehmen die verformbaren Außenpaneele und Stützpaneele eine Aufprallkraft auf und dämpfen diese aufgrund der Verformung der entsprechenden Paneele. Andererseits kann nach dem Aufprall, in welchen die Außenpaneele und Stützpaneele kurzzeitig verformt vorliegenden, diese zügig in die unverformte Ausgangsform zurück geformt werden, sodass die Fahrzeugattrappe für einen weiteren Test schnell wieder hergerichtet werden kann.

Gemäß einem weiteren Ausführungsbeispiel sind der erste Koppelbereich und der zweite Koppelbereich derart mit dem ersten Außenpaneel gekoppelt, dass bei Vorliegens des ersten Abstands das Stützpaneel in einer gewölbten Profilform vorliegt.

Unter einer gewölbten Profilform wird verstanden, dass das Stützpaneel nicht parallel d.h. entlang einer geraden Ebene verläuft, sondern dass ausschließlich die Kantenbereiche, in welchen beispielsweise die jeweiligen Koppelbereich ausgebildet sind, innerhalb einer gemeinsamen Ebene verlaufen, während ein Mittelbereich des Stützpaneels außerhalb dieser gemeinsamen Ebene verläuft. Eine gewölbte Profilform kann beispielsweise einen bestimmten Krümmungsradius aufweisen, welcher den Abstand zwischen der Ebene und dem Scheitelpunkt der gewölbten Profilform definiert. Bei Einsatz eines gewölbten Stützpaneels können homogenere Verformungseigenschaften eingestellt werden.

Gemäß einem weiteren Ausführungsbeispiel weist das erste Außenpaneel eine Verbindungseinrichtung auf, in welcher der erste Koppelbereich oder der zweite Koppelbereich befestigbar ist. Die Verbindungseinrichtung kann beispielsweise eine lösbare Verbindungseinrichtung darstellen. Beispielsweise kann die Verbindungseinrichtung ein Reißverschlusssystem, ein Knopfsystem oder ein Klettverschlusssystem darstellen. Ferner können auch unlösbare Verbindungseinrichtungen bereitgestellt werden. Hierbei können beispielsweise Klebeverbindungen oder Schweißverbindungen als Verbindungseinrichtung eingesetzt werden.

Gemäß einem weiteren Ausführungsbeispiel ist die Verbindungseinrichtung als Aufnahmeöffnung, insbesondere als Schlitz, in dem ersten Außenpaneel derart ausgebildet, dass der erste Koppelbereich oder der zweite Koppelbereich in die Aufnahmeöffnung einsteckbar ist. In einer beispielhaften Ausführungsform bildet eine Kante des Stützpaneels einen Koppelbereich. Diese Kante kann beispielsweise in Schlitz, welcher in dem Außenpaneel ausgebildet ist, eingesteckt werden. Der Schlitz weist insbesondere eine Erstreckungsrichtung in das Außenpaneel hinein auf, welche Erstreckungsrichtung nicht parallel zu einer Abstandsrichtung verläuft, entlang welcher der erste Abstand gemessen wird. Dies hat zur Folge, dass bei Veränderungen, insbesondere bei Vergrößerung ersten Abstands der entsprechenden Koppelbereiche, das Stützpaneel bzw. deren Koppelbereich nicht aus dem Schlitz herausgezogen werden kann. Bei Veränderung des Abstands wird somit eine entsprechende Verformungskraft von dem Außenpaneel auf den Koppelbereich und entsprechend auf das Stützpaneel übertragen.

Gemäß einem weiteren Ausführungsbeispiel weist der erste Koppelbereich und/oder der zweite Koppelbereich eine größere Paneeldicke auf als ein Paneelbereich des Stützpaneels zwischen dem der ersten Koppelbereich und dem zweiten Koppelbereich. Somit wird die Robustheit des Stützpaneels erhöht, da insbesondere an den Koppelbereich in Kraftspitzen übertragen werden

Gemäß einem weiteren Ausführungsbeispiel ist das Stützpaneel derart ausgebildet, dass bei Vorliegens des ersten Abstands das Stützpaneel vorgespannt ist. Beispielsweise kann das Stützpaneel ein flächiges Element darstellen, welches entlang einer Ebene verläuft. Durch Verkürzen des Abstands der Koppelbereich wölbt sich das Stützpaneel. In diesem gewölbten Zustand können die Koppelbereiche an entsprechenden Verbindungseinrichtungen an dem Außenpaneel befestigt werden, sodass bereits bei Vorliegen des ersten Abstands zwischen dem ersten Koppelbereich und dem zweiten Koppelbereich das Stützpaneel vorgespannt vorliegt. Somit kann bereits im nicht belasteten Zustand der Stützpaneele zur Versteifung und Festigung des Außenpaneels beitragen, da aufgrund der Vorspannung das Stützpaneel beispielsweise versucht die Koppelbereiche auseinander zu drücken und somit ein Bereich des Außenpaneels zwischen den Koppelbereichen gespannt wird.

Gemäß einem weiteren Ausführungsbeispiel weist das Stützpaneel einen Auflagebereich zur Auflage auf einem Boden aufweist, wobei der Auflagebereich derart ausgebildet ist, dass eine Gewichtskraft des ersten Außenpaneels und des Stützpaneels auf den Boden übertragbar ist. Insbesondere das erste Außenpaneel ist derart ausgebildet, dass bei Auflage des Stützpaneels auf dem Boden das erste Außenpaneel frei von einer kraftübertragenden Kopplung mit dem Boden ist.

Der Auflagebereich wird beispielsweise durch eine untere Bodenkante des Stützpaneels gebildet. Beispielsweise kann an dem Auflagebereich ebenfalls Stellfüße angeordnet werden. Ferner kann der Auflagebereich Befestigungsmittel aufweisen, mittels welchen eine Verbindung beispielsweise zu einer verfahrbar Plattform zum Bewegen des Dummy-Fahrzeugs geschaffen werden kann. Die Plattform kann freifahren und frei programmiert werden. Ferner kann die Plattform mittels einem Riemenanatriebs angetrieben werden.

Der Auflagebereich wird insbesondere in einer Bodenebene ausgebildet. Im Gegensatz dazu, kann beispielsweise eine untere Kante des Außenpaneels einen Abstand zu dieser Bodenebene ausbilden, sodass eine Übertragung der Gewichtskraft auf die Bodenebene unterbunden wird. Entsprechend wird die gesamte Gewichtskraft das heißt die Gewichtskraft der Außenpaneele sowie der Stützpaneele über die Stützpaneele selbst in den Boden eingeleitet. Somit wird das Risiko reduziert, das die Außenpaneele sich aufgrund des Aufliegens auf einem Boden verformen.

Gemäß einem weiteren Ausführungsbeispiel ist das Außenpanel aus einem Schichtverbund ausgebildet. Der Schichtverbund weist insbesondere eine verformbare Schaumstoffschicht auf, welche mit einer Innenseite das Innenvolumen des Dummy-Fahrzeugs zumindest teilweise umgibt. Zusätzlich oder alternativ weist der Schichtverbund insbesondere eine verformbare Außenschicht auf, welche an einer der Innenseite gegenüberliegende Außenseite der Schaumstoffschicht befestigt ist. Die verformbare Außenschicht ist insbesondere intransparent und reflektiert auftreffende Lichtwellen.

Die Schaumstoffschicht weist beispielsweise eine Dicke von 20 mm bis 100 mm und eine Dichte von 15 kg/m3 bis 60 kg/m3 auf. Bei einer Dicke von ungefähr 20 mm wird bevorzugt ein Schaumstoffmaterial mit einer Dichte von ungefähr 60 kg/m3 eingesetzt. Bei einer Dicke von ungefähr 100 mm wird bevorzugt ein Schaumstoffmaterial mit einer Dichte von ungefähr 15 kg/m3 eingesetzt.

Die Schaumstoffschicht kann beispielsweise aus Polyurethan bestehen. Ferner kann die Schaumstoffschicht mit Glasfasern oder Kohlefasern verstärkt werden. Die Schaumstoffschicht ist ferner verformbar ausgebildet. In einer beispielhaften Ausführungsform ist die Schaumstoffschicht insbesondere elastisch verformbar.

Gemäß einem weiteren Ausführungsbeispiel ist zwischen der Schaumstoffschicht und der Außenschicht eine Klebeschicht angeordnet ist. Die Klebeschicht ist beispielsweise aus einer Klebefolie gebildet, welche beispielsweise eine Schichtdicke von ungefähr 20 µm (Mikrometer) bis ungefähr 0,5 mm (Millimeter) aufweist. Die Dichte der Klebefolie beträgt beispielsweise ungefähr 0,9 kg/dm3 bis ungefähr 2,5 kg/dm3.

Gemäß einem weiteren Ausführungsbeispiel weist die Außenschicht einen Reflexionsgrad gegenüber Licht mit einem Spektralbereich von 700nm bis 900 nm, insbesondere Infrarotlicht, zwischen 60% bis 80 % hat. In anderen Worten kann die Außenschicht Infrarotlicht zumindest zu 60% bis 80 % reflektieren. Somit können Infrarotsensoren des Fahrerassistenzsystems gemessen werden.

Die Außenpaneele werden beispielsweise mittels unten genau beschriebenen Verbindungsmitteln verbunden. Diese Verbindungsmittel sind in einer bevorzugten Ausführungsform an Randbereichen Außenschicht befestigt. Beispielsweise kann das Verbindungsmittel ein Reißverschlusssystem, ein Knopfsystem oder ein Klettverschlusssystem darstellen. Ferner können auch unlösbare Verbindungsmittel bereitgestellt werden. Hierbei können beispielsweise Klebeverbindungen oder Schweißverbindungen als Verbindungseinrichtung eingesetzt werden. Ferner kann das Verbindungsmittel ein Scharnier, beispielsweise aus Metall oder Kunststoff, eingesetzt werden, sodass sich die Außenpaneele relativ zueinander verschwenken können. Die Verbindungsmittel sind im allgemeinen derart ausgestaltet, dass bei einem Aufprall sich die Außenpaneelen nicht voneinander lösen, jedoch relativ zueinander verformt, verschwenkt bzw. verbogen werden können.

Gemäß einem weiteren Ausführungsbeispiel weist der Schichtverbund ferner eine verformbare Funktionsschicht zwischen der Schaumstoffschicht und der Außenschicht auf. Die Funktionsschicht weist insbesondere eine beheizbare Schicht, eine Schicht aus Metallkomponenten, insbesondere aus metallischem Gewebe, und/oder einer Infrarotlicht-reflektierende Schicht aufweist.

Wird die Funktionsschicht beheizbar ausgeführt, so kann beispielsweise in dem Bereich eines Motorraums des Dummy-Fahrzeugs der Betrieb eines Motors bzw. dessen Wärmeabstrahlung simuliert werden. Wird ein metallisches Gewebe als Funktionsschicht in den Schichtverbund eingesetzt, wird somit die Radarreflektivität verbessert, so dass Radarsensoren des Fahrerassistenzsystems getestet werden können. Entsprechend können Infrarotsensoren des Fahrerassistenzsystems getestet werden, wenn die Funktionsschicht eine Infrarotlicht- reflektierende Schicht aufweist. Ein Schichtverbund kann beispielsweise eine Funktionsschicht oder eine Vielzahl von Funktionsschichten mit den oben aufgeführten verschiedenen Funktionen aufweisen.

Gemäß einem weiteren Ausführungsbeispiel weist das erste Außenpaneel einen Radabschnitt auf, wobei der Radabschnitt eine rund verlaufende Nut aufweist, welche einen Radabschnitt des ersten Außenpaneels von einem, den Radabschnitt umgebenden Abschnitt des ersten Außenpaneels abgrenzt.

Der Radabschnitt grenzt sich somit mittels der Nut von dem umgebenen Abschnitt des Außenpaneels ab. Der Radabschnitt kann ein integraler Bestandteil des Außenpaneels darstellen, und beispielsweise mittels Fräsens der Nut hergestellt werden. Alternativ kann der Radabschnitt ein separates Element darstellen und an dem Außenpaneel befestigt werden. Der Radabschnitt kann beispielsweise eine Zylinderform aufweisen, und als separates Bauteil an das Außenpaneel befestigt werden. An einem entsprechenden Außenpaneel kann ein Radabschnitt oder eine Vielzahl von Radabschnitten ausgebildet werden.

Gemäß einem weiteren Ausführungsbeispiel weist der Radabschnitt eine Umfangsfläche und der umgebene Abschnitt eine Eingrenzfläche auf, wobei die Umfangsfläche und die Eingrenzfläche gegenüberliegen und mittels der Nut voneinander beabstandet sind. Die Eingrenzfläche weist insbesondere eine metallische Oberflächenschicht und die Umfangsfläche insbesondere eine lichtabsorbierende Oberflächenschicht, insbesondere eine gummierte Oberflächenschicht, auf. Die Eingrenzfläche des Außenpaneels bildet somit einen Radkasten des Dummy-Fahrzeugs aus. Die Umfangsfläche bildet somit die Reifenfläche des Radabschnitts aus.

Gemäß einem weiteren Ausführungsbeispiel weist der Radabschnitt eine Außenfläche auf, wobei die Außenfläche eine weitere metallische Oberflächenschicht aufweist. Die weitere metallische Oberflächenschicht weist ein Muster, insbesondere indikativ für eine Anordnung von Felgenspeichen, auf. Die Außenfläche ist insbesondere diejenige Fläche, welche sich der Umfangsfläche des Radabschnitts anschließt. Die Außenfläche kann einen radial äußeren Randbereich aufweisen, welcher ein Licht absorbierendes Material, insbesondere eine gummierte Schicht, aufweist. Im Zentrum der Außenfläche, welches von dem radial äußeren Randbereich umgeben ist, ist beispielsweise die metallische Oberflächenschicht ausgebildet. Das Muster der metallischen Oberflächenschicht ist Indikativ für ein Speichenmuster einer realen Felge. Insbesondere kann das Zentrum der Außenfläche mittels eines austauschbaren Metallzylinders, welcher beispielsweise eine Radfelge eines Dummy-Fahrzeugs ausbildet, ausgebildet werden.

Gemäß einem weiteren Ausführungsbeispiel ist der Radabschnitt drehbar relativ zu dem ersten Außenpaneel ausgebildet ist. Beispielsweise kann hierfür ein Antriebsmotor angeordnet werden, welcher den Radabschnitt dreht. Ferner kann der Radabschnitt bewegt werden, indem das Dummy-Fahrzeug entlang des Bodens verfahren wird und der Radabschnitt Kontakt zu einer Bodenfläche hat. Somit können die Radarsensoren des Fahrerassistenzsystems Mikrodopplereffekte des drehenden Radabschnitts messen. Dies verbessert die Realitätstreue der Simulation des Dummy-Fahrzeugs.

Gemäß einem weiteren Ausführungsbeispiel weist das Dummy-Fahrzeug ferner ein verformbares zweites Außenpaneel, welches zumindest teilweise das Innenvolumen des Dummy-Fahrzeugs umgibt, auf. Das Öffnungselement, das erste Außenpaneel und das zweite Außenpaneel bilden die selbsttragende Einheit, wobei das Öffnungselement lösbar mit dem zweiten Außenpaneel derart verbunden ist, dass bei Einwirkens einer Aufprallkraft das Öffnungselement vom zweiten Außenpaneel lösbar ist, sodass die selbstragende Einheit auflösbar ist und eine Verformung des Fahrzeugs bereitstellbar ist.

Nach dem Test/Crash bleibt eine weitgehend zusammenhängende Gesamtstruktur zumindest zwischen dem ersten Außenpaneel und dem zweiten Außenpaneel erhalten. Zum Wiederaufstellen des Dummy-Fahrzeugs müssen lediglich die Öffnungselemente wieder geschlossen werden und die Außenpaneele relativ zueinander ausgerichtet werden, wodurch ein erheblicher zeitlicher Vorteil bei der Umsetzung von wiederholten Tests geboten wird.

Gemäß einer weiteren beispielhaft Ausführungsform weist das Dummy-Fahrzeug ein weiteres Stützpaneel auf, welches im Innenvolumen des Dummy-Fahrzeugs angeordnet ist. Das weitere Stützpaneel weist einen weiteren ersten Koppelbereich und einen von dem weiteren ersten Koppelbereich beabstandeten weiteren zweiten Koppelbereich auf. Der weitere erste Koppelbereich und der weitere zweite Koppelbereich sind derart mit dem zweiten Außenpaneel gekoppelt, dass bei Veränderung eines zweiten Abstands zwischen dem weiteren ersten Koppelbereich und dem weiteren zweiten Koppelbereich das weitere Stützpaneel vorspannbar ist.

Mit dem oben aufgeführten Ausführungsbeispiel wird verdeutlicht, dass eine Vielzahl weiterer Außenpaneele mit entsprechenden Stützpaneelen ein Innenvolumen umgeben können und somit das Dummy-Fahrzeug ausbilden können. Beispielsweise ist das Außenpaneel eine linke Karosseriehälfte und das zweite Außenpaneel eine rechte Karosseriehälfte des Dummy-Fahrzeugs. Das zweite Außenpaneel kann dieselben Ausführungsbeispiele bzw. Merkmale aufweisen wie das oben beschriebene erste Außenpaneel. Ferner kann das weitere Stützpaneel dieselben Merkmale aufweisen wie das oben beschriebene Stützpaneel. Alternativ kann entsprechend das erste Außenpaneel eine komplette Fahrzeugkarosserie nachbilden, ohne dass das erste Außenpaneel in weiterer Außenpaneele trennbar ist.

Gemäß einem weiteren Ausführungsbeispiel sind das Stützpanel und das weitere Stützpanel in einem Koppelabschnitt miteinander befestigt. Beispielsweise kann das Stützpaneel und das weitere Stützpaneel mit einer lösbaren Verbindung an einem Koppelabschnitt befestigt werden. Der Koppelabschnitt bildet einen Abschnitt aus, in welchem sich die Stützpaneele beispielsweise berühren. In diesem Koppelabschnitt kann beispielsweise mittels einer Schnurverbindung, einer Klettstoffverbindung oder einer Knopfverbindung die Stützpaneele miteinander befestigt werden.

Gemäß einem weiteren Ausführungsbeispiel weist das Dummy-Fahrzeug eine Versteifungsstrebe auf, wobei die Versteifungsstrebe zwischen dem ersten Außenpaneel und dem zweiten Außenpaneel derart befestigt ist, dass eine Druckkraft auf die Versteifungsstrebe übertragbar ist. Die Versteifungsstrebe kann somit einem minimalen Abstand zwischen zwei Außenpaneelen absichern. Ferner dient die Versteifungsstrebe zur Versteifung des Fahrzeuges sodass dieses robuster ist und eine selbsttragende Einheit ausbildet. Die Versteifungsstrebe kann beispielsweise eine Metallstrebe oder eine faserverstärkte Kunststoffstrebe ausbilden.

In einer bevorzugten Ausführungsform wird die Versteifungsstrebe zwischen zwei gegenüberliegenden Radabschnitten gegenüber liegender Außenpaneele angeordnet. Die Versteifungsstrebe verläuft somit entlang einer gedachten Radachse des Dummy-Fahrzeugs.

Die Versteifungsstrebe kann ferner mittels einer Befestigungseinrichtung an einem Boden bzw. an einer verfahrbar Plattform befestigt werden.

Beispielsweise kann die Befestigungseinrichtung eine Magnetbefestigung, einen Klettverschluss oder einen Hakenmechanismus ausbilden.

Gemäß einem weiteren Ausführungsbeispiel weist zumindest das erste Außenpaneel oder das zweite Außenpaneel eine Aufnahmeöffnung auf, in welcher die Versteifungsstrebe lösbar einsteckbar ist. Die Aufnahmeöffnung ist dabei derart ausgebildet, dass die Versteifungsstrebe hineingeschoben werden kann und in einer gewissen Tiefe der Aufnahmeöffnung, beispielsweise an einem Anschlag, ansteht. Lösen sich die Außenpaneele voneinander aufgrund eines Aufpralls, bzw. erhöht sich der Abstand zwischen den beiden Außenpaneelen, so rutscht die Versteifungsstrebe aus der Aufnahmeöffnung hinaus und eine entsprechende weitere Verformung der Außenpaneele wird ermöglicht.

Gemäß einem weiteren Ausführungsbeispiel weist das Dummy-Fahrzeug ein Zugelement, insbesondere ein elastisches Zugelement, auf, wobei das Zugelement mit dem ersten Außenpaneel und/oder dem zweiten Außenpaneel und der Versteifungsstrebe derart befestigt ist, dass das Zugelement Zugkräfte zwischen dem ersten Außenpaneel und/oder dem zweiten Außenpaneel einerseits und der Versteifungsstrebe andererseits überträgt. Beispielsweise ist die Versteifungsstrebe als Hohlprofil ausgebildet, wobei das Zugelement im Inneren des Hohlprofils verläuft. Das Zugelement kann beispielsweise eine elastische Schnur, wie beispielsweise einen elastischen Expander, darstellen. Somit können sich beispielsweise die Außenpaneele von der Versteifungsstrebe bei einem Aufprall entfernen, so dass sich die Versteifungsstrebe von dem ansprechenden Außenpaneel löst, jedoch wird eine bleibende Verbindung zwischen der Versteifungsstrebe und dem Außenpaneel über das Zugelement gesichert. Somit ist das Wiederzusammensetzen des Dummy-Fahrzeugs in den Ausgangszustand einfacher, da die Versteifungsstrebe sich nicht willkürlich von dem entsprechenden Außenpaneel löst.

Gemäß einem weiteren Ausführungsbeispiel weist das Dummy-Fahrzeug ein verformbares drittes Außenpaneel, welches zumindest teilweise das Innenvolumen des Dummy-Fahrzeugs umgibt. Das dritte Außenpaneel ist mit dem ersten Außenpaneel und dem zweiten Außenpaneel verbunden, wobei das drittes Außenpaneel insbesondere einen Frontbereich des Dummy-Fahrzeugs ausbildet.

Gemäß einem weiteren Ausführungsbeispiel ein verformbares viertes Außenpaneel, welches zumindest teilweise das Innenvolumen des Dummy-Fahrzeugs umgibt. Das vierte Außenpaneel ist mit dem ersten Außenpaneel und dem zweiten Außenpaneel verbunden, wobei das vierte Außenpaneel insbesondere einen Heckbereich des Dummy-Fahrzeugs ausbildet.

Das dritte und vierte Außenpaneel können dieselben Merkmalen Ausgestaltungen aufweisen wie die oben beschriebenen ersten und zweiten Außenpaneele. Dabei können die dritten und vierten Außenpaneele mit entsprechenden Stützpaneelen befestigt und versteift werden. Alternativ können die dritten und vierten Außenpaneele ohne Kopplung zu einem Stützpaneel angeordnet werden. Beispielsweise wird das dritte Außenpaneel und das vierte Außenpaneel zwischen dem ersten und zweiten Außenpaneel verbunden. Das dritte Außenpaneel kann beispielsweise einen vorderen Bereich, beispielsweise eine Stoßstange, eines Dummy-Fahrzeugs ausbilden. Das vierte Außenpaneel weist beispielsweise einen Heckbereich, beispielsweise eine hintere Stoßstange, eines Dummy-Fahrzeugs aus.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 eine schematische Darstellung eines Dummy-Fahrzeugs gemäß einer beispielhaften Ausführungsform ohne Darstellung eines Dachpaneels,
Fig. 2 eine schematische Darstellung einer Draufsicht auf ein Dummy-Fahrzeug gemäß Fig. 1 im unverformten Zustand,
Fig. 3 eine schematische Darstellung einer Draufsicht auf ein Dummy-Fahrzeug gemäß Fig. 1 im verformten Zustand
Fig. 4 eine vergrößerte Darstellung von gegenüberliegenden Radabschnitten gemäß einer beispielhaften Ausführungsform der vorliegenden Erfindung,
Fig. 5 eine schematische Darstellung eines Schichtverbunds gemäß einer beispielhaften Ausführungsform der vorliegenden Erfindung,
Fig. 6 eine schematische Darstellung eines Dummy-Fahrzeugs bei einer Befestigung eines Dachpanels gemäß einer beispielhaften Ausführungsform der vorliegenden Erfindung,
Fig. 7 eine schematische Darstellung eines Dummy-Fahrzeugs einschließlich eines Dachpaneels gemäß einer beispielhaften Ausführungsform der vorliegenden Erfindung, und
Fig. 8 eine schematische Darstellung des Dummy-Fahrzeugs aus Fig. 7 im verformten Zustand.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

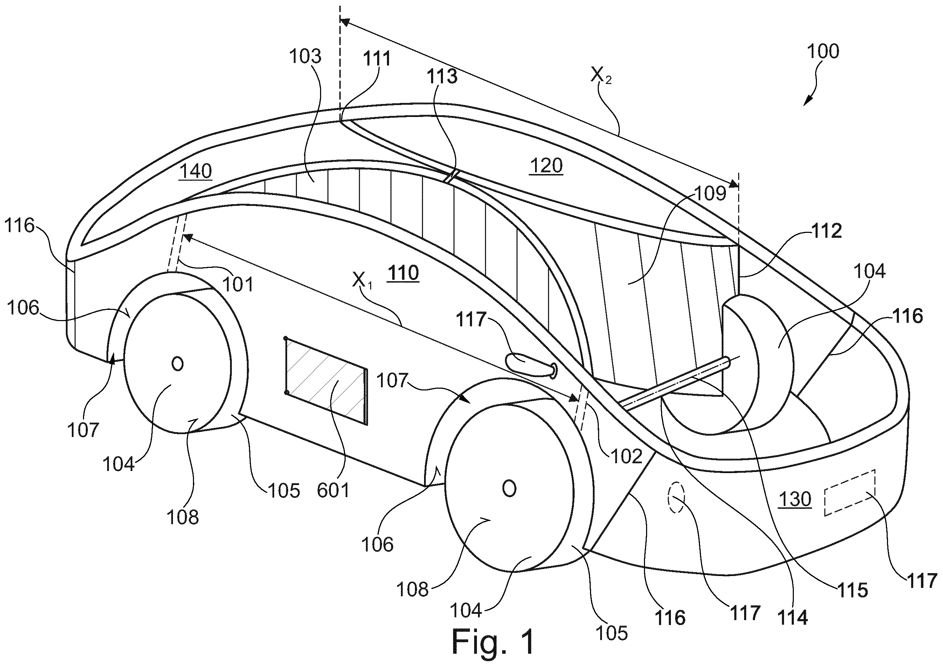

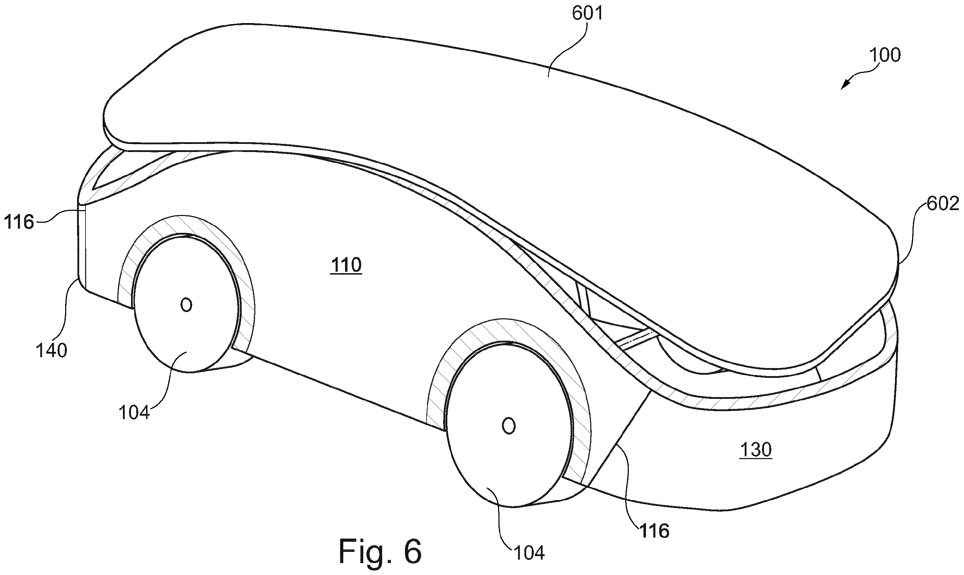

**Fig. 1** zeigt eine schematische Darstellung eines Dummy-Fahrzeugs 100 zum Durchführen von Tests für ein Fahrerassistenzsystem gemäß einer beispielhaften Ausführungsform ohne Darstellung eines Dachpaneels 601 (siehe hierzu Fig. 6). Das Dummy-Fahrzeug 100 weist ein verformbares erste Außenpaneel 110, welches zumindest teilweise ein Innenvolumen des Dummy-Fahrzeugs 100 umgibt, und ein Öffnungselement 601 auf, welches zumindest teilweise das Innenvolumen des Dummy-Fahrzeugs 100 umgibt, wobei das Öffnungselement 601 und das erste Außenpaneel 110 eine selbstragende Einheit bilden. Das Öffnungselement 601 ist lösbar mit dem ersten Außenpaneel 110 derart verbunden, dass bei Einwirkens einer Aufprallkraft das Öffnungselement 601 vom ersten Außenpaneel 110 lösbar ist, sodass die selbstragende Einheit auflösbar ist und eine Verformung des Fahrzeugs bereitstellbar ist.

Ferner weist das Dummy-Fahrzeug 100 ein elastisch verformbares Stützpaneel 103, welches im Innenvolumen des Dummy-Fahrzeugs 100 angeordnet ist, auf. Das Stützpaneel 103 weist einen ersten Koppelbereich und einen von dem ersten Koppelbereich beabstandeten zweiten Koppelbereich 102 auf. Der erste Koppelbereich 101 und der zweite Koppelbereich 102 sind derart mit dem ersten Außenpaneel 110 gekoppelt, dass das Stützpaneel 103 in einer gewölbten Profilform vorliegt, so dass bei Veränderung eines ersten Abstands zwischen dem ersten Koppelbereich 101 und dem zweiten Koppelbereich 102 das Stützpaneel 103 vorspannbar ist.

Das Dummy-Fahrzeug 100 besteht aus mehreren Außenpaneelen 110, 120, 130, 140, 601 welche zusammen eine geschlossene Außenhülle des Dummy-Fahrzeugs beschreiben. Die Außenpaneele 110, 120, 130, 140, 601 umschließen ein Innenvolumen des Dummy-Fahrzeugs 100. Die Außenpaneele 110, 120, 130, 140, 601 sind verformbar ausgebildet. Dies bedeutet, dass bei Aufprall des Dummy-Fahrzeugs 100 mit einem anderen Testobjekt die Außenpaneele 110, 120, 130, 140, 601 zerstörungsfrei verformt werden können. Ein Außenpaneel 110, 120, 130, 140, 601 kann dabei an der Außenfläche, welche in Richtung der Umgebung des Dummy-Fahrzeugs 100 gerichtet ist, in einer gewünschten Wagenfarbe lackiert werden. Insbesondere können die Außenpaneele 110, 120, 130, 140, 601 elastisch verformbar sein und sich somit nach einem Aufprall, in welchem die Außenpaneele 110, 120, 130, 140, 601 elastisch verformt werden, zurück in die Ausgangslage verformen. Ferner können die Außenpaneele 110, 120, 130, 140, 601 zur realitätsnahen Simulation einer Fahrzeugkarosserie Metallgewebe aufweisen, um die Materialeigenschaften einer metallischen Fahrzeugkarosserie realitätsnah zu simulieren. Ferner weisen die verformbaren Außenpaneele 110, 120, 130, 140, 601 eine ausreichende Steifigkeit auf, sodass kein Vibrieren bzw. Flattern der Außenpaneele110, 120, 130, 140, 601 aufgrund von eines Fahrtwindes oder aufgrund von Bodenwellen bei Bewegung des Dummy-Fahrzeugs 100 entsteht.

Das Dummy-Fahrzeug weist ein weiteres elastisch verformbares Stützpaneel 109 auf, welches im Innenvolumen des Dummy-Fahrzeugs 100 angeordnet ist, und ein verformbares zweites Außenpaneel 120, welches zumindest teilweise das Innenvolumen des Dummy-Fahrzeugs 100 umgibt, auf. Das weitere Stützpaneel 109 weist einen weiteren ersten Koppelbereich 111 und einen von dem weiteren ersten Koppelbereich 111 beabstandeten weiteren zweiten Koppelbereich 112 auf. Der weitere erste Koppelbereich 111 und der weitere zweite Koppelbereich 112 sind derart mit dem zweiten Außenpaneel 120 gekoppelt, dass bei Veränderung eines zweiten Abstands x2 zwischen dem weiteren ersten Koppelbereich 111 und dem weiteren zweiten Koppelbereich 112 das weitere Stützpaneel 109 vorspannbar ist.

Das Außenpaneel 110 bildet eine linke Karosseriehälfte und das zweite Außenpaneel 120 bildet eine rechte Karosseriehälfte des Dummy-Fahrzeugs 100.

Das Stützpanel 103 und das weitere Stützpanel 109 sind in einem Koppelabschnitt 113 miteinander befestigt. Der Koppelabschnitt 113 bildet einen Abschnitt aus, in welchem sich die Stützpaneele 103, 109 beispielsweise berühren. In diesem Koppelabschnitt 113 kann beispielsweise mittels einer Schnurverbindung die Stützpaneele 103, 109 miteinander befestigt werden.

Ein verformbares drittes Außenpaneel 130 umgibt zumindest teilweise das Innenvolumen des Dummy-Fahrzeugs 100. Das dritte Außenpaneel 130 ist mit dem ersten Außenpaneel 110 und dem zweiten Außenpaneel 120verbunden, wobei das drittes Außenpaneel 130 einen Frontbereich des Dummy-Fahrzeugs 100 ausbildet.

Ein verformbares viertes Außenpaneel 140 umgibt zumindest teilweise das Innenvolumen des Dummy-Fahrzeugs 100. Das vierte Außenpaneel 140 ist mit dem ersten Außenpaneel 110 und dem zweiten Außenpaneel 120 verbunden, wobei das vierte Außenpaneel 140 insbesondere einen Heckbereich des Dummy-Fahrzeugs 100 ausbildet.

Die elastisch verformbaren Stützpaneele 103, 109 sind an einem entsprechenden Außenpaneel 110, 120 befestigt. Dabei ist das Stützpaneel 103 mit einem ersten Koppelbereich 101 und einem, mit einem ersten Abstand x1 beabstandeten zweiten Koppelbereich 102 an dem Außenpaneel 110 befestigt. Der erste Koppelbereich 101 und der zweite Koppelbereich 102 des elastisch verformbaren Stützpaneels 103 bilden beispielsweise Kantenbereiche des Stützpaneels 103.

Die Stützpaneele 103, 109 und die Außenpaneele 110, 120, 130, 140 sind selbsttragend ausgebildet ist. Insbesondere sind die Außenpaneele 110, 120, 130, 140 und die Stützpaneele103, 109 derart steif ausgebildet, dass diese im gegenseitigen Verbund eine selbsttragende Einheit, d.h. das Dummy-Fahrzeug 100, ausbilden. Das Dummy-Fahrzeug 100 kann beispielsweise auf dem Boden aufgestellt werden, ohne dass es zu weiteren Verformungen kommt. Mit anderen Worten bleibt insbesondere im unbelasteten Zustand, in welchem das Dummy-Fahrzeug 100 auf dem Boden aufsteht, der erste Abstand bzw. allgemein die Abstände x1, x2 zwischen den Koppelbereichen 101, 102, 111, 112 konstant. Das Stützpaneel 103, 109 ist dabei ein flächiges Element.

Der erste Koppelbereich 101 und der zweite Koppelbereich 103 sind derart mit dem ersten Außenpaneel 110 gekoppelt, dass bei Vorliegens des ersten Abstands x1 das Stützpaneel 103 in einer gewölbten Profilform vorliegt. Entsprechend liegt das weitere Stützpaneel 109 bei Abstand x2 in einer gewölbten Profilform vor.

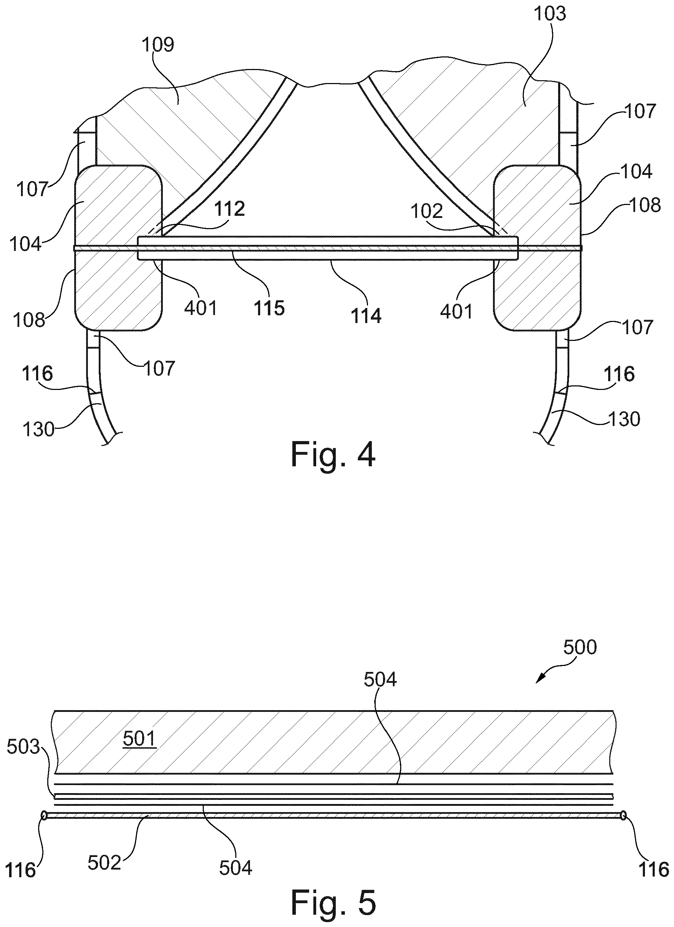

Die Außenpaneele 110, 120 werden beispielsweise Verbindungsmitteln 116 verbunden. Diese Verbindungsmitteln 116 sind in einer bevorzugten Ausführungsform an Randbereichen der Außenschicht 502 (siehe Fig. 5) befestigt.

Das erste Außenpaneel 110 und das zweite Außenpaneel 120 weisen Radabschnitte 104 auf. Ein Radabschnitt104 weist eine rund verlaufende Nut 107 auf, welche einen Radabschnitt 104 z.B. des ersten Außenpaneels 110 von einem, den Radabschnitt 104 umgebenden Abschnitt des ersten Außenpaneels 110 abgrenzt.

Der Radabschnitt 104 grenzt sich somit mittels der Nut 107 von dem umgebenen Abschnitt des Außenpaneels 110, 120 ab. Der Radabschnitt 104 kann ein integraler Bestandteil des Außenpaneels 110, 120 darstellen, und beispielsweise mittels Fräsens der Nut 107 hergestellt werden. Alternativ kann der Radabschnitt 104 ein separates Element darstellen und an dem Außenpaneel 110, 120 befestigt werden. An einem entsprechenden Außenpaneel 110, 120 kann ein Radabschnitt 104 oder eine Vielzahl von Radabschnitten 140 ausgebildet werden.

Der der Radabschnitt weist eine Umfangsfläche 105 und der umgebenen Abschnitt eine Eingrenzfläche 106 auf. Die Umfangsfläche 105 und die Eingrenzfläche 106 sind gegenüberliegen und mittels der Nut 107 voneinander beabstandet. Die Eingrenzfläche 106 weist insbesondere eine metallische Oberflächenschicht und die Umfangsfläche 105 insbesondere eine lichtabsorbierende Oberflächenschicht, insbesondere eine gummierte Oberflächenschicht, auf. Die Eingrenzfläche 106 des Außenpaneels 110, 120 bildet somit einen Radkasten des Dummy-Fahrzeugs 100 aus. Die Umfangsfläche 105 bildet somit die Reifenfläche des Radabschnitts 104 aus.

Der Radabschnitt 104 eine Außenfläche 108 auf, wobei die Außenfläche 108 eine weitere metallische Oberflächenschicht aufweist. Die weitere metallische Oberflächenschicht weist ein Muster, insbesondere indikativ für eine Anordnung von Felgenspeichen, auf. Die Außenfläche 108 ist insbesondere diejenige Fläche, welche sich der Umfangsfläche 105 des Radabschnitts 104 anschließt. Die Außenfläche 108 kann einen radial äußeren Randbereich aufweisen, welcher ein Licht absorbierendes Material, insbesondere eine gummierte Schicht, aufweist. Im Zentrum der Außenfläche 108, welches von dem radial äußeren Randbereich umgeben ist, ist beispielsweise die metallische Oberflächenschicht ausgebildet. Das Muster der metallischen Oberflächenschicht ist Indikativ für ein Speichenmuster einer realen Felge. Insbesondere kann das Zentrum der Außenfläche 108 mittels eines austauschbaren Metallzylinders, welcher beispielsweise eine Radfelge eines Dummy-Fahrzeugs ausbildet, ausgebildet werden.

Der Radabschnitt kann drehbar relativ zu dem Außenpaneel 110, 120 ausgebildet sein.

Das Dummy-Fahrzeug 100 weist ferner eine Versteifungsstrebe 114 auf, wobei die Versteifungsstrebe 114 zwischen dem ersten Außenpaneel 110 und dem zweiten Außenpaneel 120 derart befestigt ist, dass eine Druckkraft auf die Versteifungsstrebe übertragbar ist. Die Versteifungsstrebe 114 kann somit einem minimalen Abstand zwischen zwei Außenpaneelen 110, 120 absichern. Ferner dient die Versteifungsstrebe 114 zur Versteifung des Dummy-Fahrzeug, sodass dieses robuster ist und eine selbsttragende Einheit ausbildet.

Die Versteifungsstrebe 114 ist zwischen zwei gegenüberliegenden Radabschnitten 104 gegenüber liegender Außenpaneele 110, 120 angeordnet.

Das erste Außenpaneel 110 und das zweite Außenpaneel 120 weist eine Aufnahmeöffnung 400 (siehe Fig. 4) auf, in welcher die Versteifungsstrebe 114 lösbar einsteckbar ist.

Das Dummy-Fahrzeug 100 weist ferner ein Zugelement 115, insbesondere ein elastisches Zugelement, auf, wobei das Zugelement mit dem ersten Außenpaneel 110 und/oder dem zweiten Außenpaneel 120 und der Versteifungsstrebe 114 derart befestigt ist, dass das Zugelement 115 Zugkräfte zwischen dem ersten Außenpaneel 110 und/oder dem zweiten Außenpaneel 120 einerseits und der Versteifungsstrebe 114 andererseits überträgt.

Ferner können auf der Außenfläche der Außenpaneele 110, 120, 130, 140 Funktionselemente 117, wie beispielsweise ein Außenspiegel, ein Nummernschildhalter oder ein Scheinwerfer befestigt, beispielsweise aufgeklebt, werden. In einer beispielhaften Ausführungsform kann beispielsweise bei Verzögerung bzw. beim Bremsen des Dummy-Fahrzeugs 100 ein Rückscheinwerfer leuchten, um somit ein Bremslicht zu simulieren.

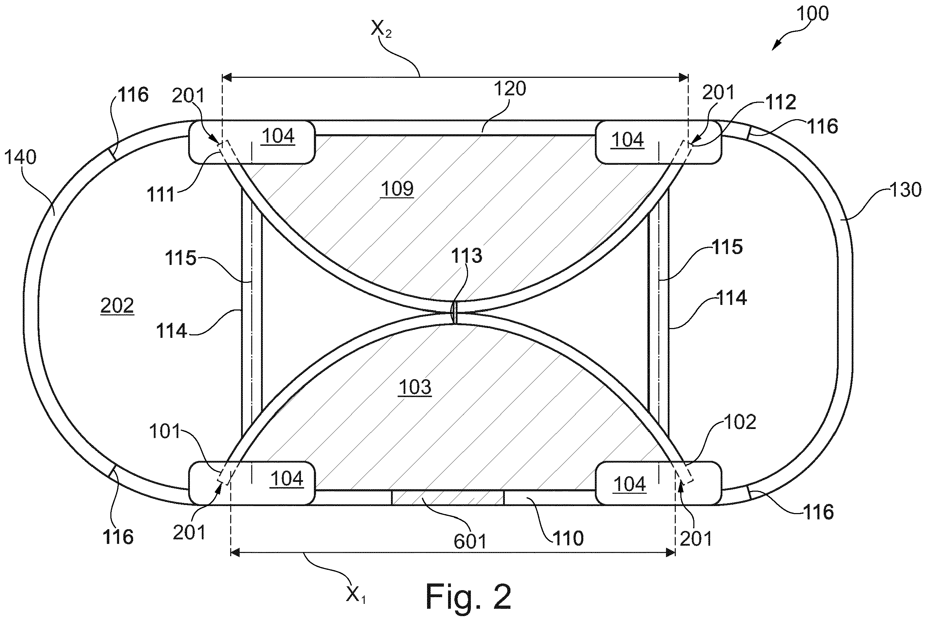

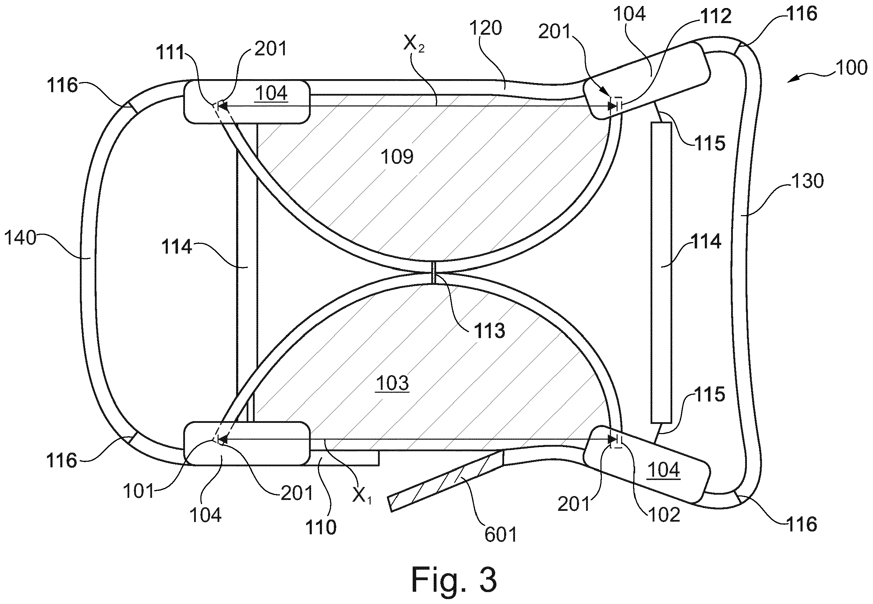

**Fig. 2** eine schematische Darstellung einer Draufsicht auf ein Dummy-Fahrzeug 100 gemäß Fig. 1 im unverformten Zustand und **Fig. 3** eine schematische Darstellung einer Draufsicht auf ein Dummy-Fahrzeug gemäß Fig. 1 im verformten Zustand, in welchem das Öffnungselement 601 geöffnet ist.

Bei einem Aufprall des Dummy-Fahrzeugs 100 wirkt eine hohe Aufprallenergie auf die Außenpaneele 110, 120, 130, 140. Diese beginnen sich zu verformen, um einerseits den Aufprallstoß abzufangen und andererseits um eine realitätsnahe Kollision mit realen Fahrzeugen zu simulieren. Aufgrund der Verformung der Außenpaneele 110, 120, 130, 140 verändern sich jeweils die Abstände (d.h. die Abstände x1, x2 werden verlängert oder verkürzt) zwischen den ersten Koppelbereichen 101, 111 und den zweiten Koppelbereichen 102, 112 (siehe Fig. 3). Dies führt wiederum zu einer Vorspannung der elastischen Stützpaneele 103, 109. Nach dem Aufprall verformt sich das Stützpaneel 103, 109 zurück in seine Ausgangslage und drückt oder zieht den ersten Koppelbereich101, 111 und den zweiten Koppelbereich 102, 112 in die Ursprungsform, sodass wiederum der erste Abstand x1 zwischen dem ersten Koppelbereich 101, 111 und dem zweiten Koppelbereich 102, 112 vorliegt. Dabei wird wiederum das Außenpaneel 110, 120 in seine Ursprungsform gebracht und beispielsweise erneut gespannt.

Das Öffnungselement 601 ist insbesondere derart lösbar mit dem ersten Außenpaneel verbunden, dass bei Erhöhung eines Luftdrucks im Innenvolumen oder aufgrund einer mechanischen Verformung aufgrund einer Aufprallkraft des Dummy-Fahrzeugs das Öffnungselement 601 vom ersten Außenpaneel 110 lösbar ist, sodass ein Druckausgleich zwischen dem Innenvolumen und der Umgebung des Dummy-Fahrzeugs bereitstellbar ist (siehe Fig. 3).

Aufgrund der Verformung des Dummy-Fahrzeugs 100 nach einem Aufprall öffnet sich das Öffnungselement 601 und löst damit die selbsttragende Struktur des Dummy-Fahrzeugs 100 auf. Durch Auflösung der selbsttragenden Struktur sind die einzelnen Komponenten des Dummy-Fahrzeugs 100, wie beispielsweise die Außenpaneele 110, 120, 130, 140 und die Öffnungselemente 601 relativ zueinander bewegbar (verformbar). Insbesondere die Außenpaneele 110, 120, 130, 140 bleiben nach Auflösung der selbsttragenden Struktur miteinander verbunden und können sich aufgrund einer flexiblen Verbindung relativ zueinander verformen. Das Öffnungselement 601 kann nach dem Öffnen mit einem Bereich an dem entsprechenden Außenpaneel befestigt bleiben.

Solange die selbstragende Struktur aus Außenpaneelen 110, 120, 130, 140 und Öffnungselementen 601 geschlossen ist, ist das Dummy-Fahrzeug formstabil und z.B. windbeständig. Durch die Kollisionsenergie führt die Kraft oder der Überdruck zur Öffnung der Öffnungselements 601 und die Struktur wird weich.

Das erste Außenpaneel 110 (und entsprechend das zweite Außenpaneel 120) weist eine Verbindungseinrichtung 201 auf, in welcher der erste Koppelbereich 101, 111 oder der zweite Koppelbereich 102, 112 befestigbar ist. Die Verbindungseinrichtung 201 kann beispielsweise eine lösbare Verbindungseinrichtung 201 darstellen. Die Verbindungseinrichtung 201 ist in dem vorliegenden Beispiel als Aufnahmeöffnung, insbesondere als Schlitz, in den Außenpaneelen 110, 120 derart ausgebildet, dass der erste Koppelbereich 101, 111 oder der zweite Koppelbereich 102, 112 in die Aufnahmeöffnung einsteckbar ist. Eine Kante des Stützpaneels 103, 109 bildet einen Koppelbereich 101, 111, 102, 112. Diese Kante kann beispielsweise in den Schlitz, welcher in dem Außenpaneel 110, 120 ausgebildet ist, eingesteckt werden. Der Schlitz weist insbesondere eine Erstreckungsrichtung in das Außenpaneel 110, 120 hinein auf, welche Erstreckungsrichtung nicht parallel zu einer Abstandsrichtung verläuft, entlang welcher der erste Abstand x1 oder zweite Abstand x2 gemessen wird. Dies hat zur Folge, dass bei Veränderungen, insbesondere bei Vergrößerung der Abstände x1, x2 der entsprechenden Koppelbereiche 101, 111, 102, 112, das Stützpaneel 103, 109 bzw. deren Koppelbereich 101, 111, 102, 112 nicht aus dem Schlitz herausgezogen werden kann (siehe Fig. 3). Bei Veränderung des Abstands x1, x2 wird somit eine entsprechende Verformungskraft von dem Außenpaneel 110, 120 auf den Koppelbereich 101, 111, 102, 112 und entsprechend auf das Stützpaneel 103, 109übertragen.

Die Stützpaneele 103, 109 weisen einen Auflagebereich zur Auflage auf einem Boden 202 auf, wobei der Auflagebereich derart ausgebildet ist, dass eine Gewichtskraft der Außenpaneele 110, 120, 130, 140 und der Stützpaneele 103, 109 auf den Boden 202 übertragbar ist. Insbesondere die Außenpaneele 110, 120, 130, 140 sind derart ausgebildet, dass bei Auflage der Stützpaneele 103, 109 auf dem Boden die Außenpaneele 110, 120, 130, 140 frei von einer kraftübertragenden Kopplung mit dem Boden sind.

In Fig. 3 wird ferner gezeigt, dass in einem verformten Zustand des Dummy-Fahrzeugs 100 die Versteifungsstrebe 114 von den Außenpaneelen 110, 120 gelöst sein kann und ausschließlich über das Zugelement 115 mit den Außenpaneelen 110, 120 verbunden ist.

**Fig. 4** zeigt eine vergrößerte Darstellung von gegenüberliegenden Radabschnitten 104 gemäß dem Dummy-Fahrzeug aus Fig. 1 bis Fig. 3. Das erste Außenpaneel 110 oder das zweite Außenpaneel 120 weisen eine Aufnahmeöffnung auf, in welcher die Versteifungsstrebe 114 lösbar einsteckbar ist. Die Aufnahmeöffnung 114 ist dabei derart ausgebildet, dass die Versteifungsstrebe 114 hineingeschoben werden kann und in einer gewissen Tiefe der Aufnahmeöffnung, beispielsweise an einem Anschlag, ansteht. Lösen sich die Außenpaneele 110, 120 voneinander aufgrund eines Aufpralls (siehe z.B. Fig. 3), bzw. erhöht sich der Abstand zwischen den beiden Außenpaneelen 110, 120, so rutscht die Versteifungsstrebe 114 aus der Aufnahmeöffnung hinaus und eine entsprechende weitere Verformung der Außenpaneele 110, 120 wird ermöglicht.

Beispielsweise ist die Versteifungsstrebe 114 als Hohlprofil ausgebildet, wobei das Zugelement 115 im Inneren des Hohlprofils verläuft. Das Zugelement 115 kann beispielsweise eine elastische Schnur, wie beispielsweise einen elastischen Expander, darstellen. Somit können sich beispielsweise die Außenpaneele 110, 120 von der Versteifungsstrebe 114 bei einem Aufprall entfernen, so dass sich die Versteifungsstrebe 114 von dem ansprechenden Außenpaneel 110, 120 löst, jedoch wird eine bleibende Verbindung zwischen der Versteifungsstrebe 114 und dem Außenpaneel 110, 120 über das Zugelement 115 gesichert.

**Fig. 5** zeigt eine schematische Darstellung eines Schichtverbunds 500 gemäß einer beispielhaften Ausführungsform der vorliegenden Erfindung. Ein Außenpanel 110, 120, 130, 140 ist z.B. aus einem Schichtverbund 500 ausgebildet. Der Schichtverbund 500 weist insbesondere eine verformbare Schaumstoffschicht 501 auf, welche mit einer Innenseite das Innenvolumen des Dummy-Fahrzeugs 100 zumindest teilweise umgibt. Zusätzlich oder alternativ weist der Schichtverbund 500 insbesondere eine verformbare Außenschicht 502 auf, welche an einer der Innenseite gegenüberliegende Außenseite der Schaumstoffschicht 501 befestigt ist. Die verformbare Außenschicht 502 ist insbesondere intransparent und absorbiert auf treffende Lichtwellen. Die Schaumstoffschicht 501 ist ferner verformbar ausgebildet. In einer beispielhaften Ausführungsform ist die Schaumstoffschicht 501 insbesondere elastisch verformbar.

Zwischen der Schaumstoffschicht 501 und der Außenschicht 502 bzw. einer Funktionsschicht 503 sind Klebeschichten 503 angeordnet. Die Klebeschicht 503 ist beispielsweise aus einer Klebefolie gebildet, welche beispielsweise eine Schichtdicke von ungefähr 50 µm (Mikrometer) bis ungefähr 0,25 mm (Millimeter) aufweist.

Der Schichtverbund 500 weist ferner eine verformbare Funktionsschicht 503 zwischen der Schaumstoffschicht 501 und der Außenschicht 502 auf. Die Funktionsschicht 503 weist insbesondere eine beheizbare Schicht, eine Schicht aus Metallkomponenten, insbesondere aus metallischem Gewebe, und/oder einer Infrarotlicht-reflektierende Schicht aufweist.

Wird die Funktionsschicht 503 beheizbar ausgeführt, so kann beispielsweise in dem Bereich eines Motorraums des Dummy-Fahrzeugs 100 der Betrieb eines Motors bzw. dessen Wärmeabstrahlung simuliert werden. Wird ein metallisches Gewebe als Funktionsschicht 503 in den Schichtverbund 500 eingesetzt, wird somit die Radarreflexivität verbessert, so dass Radarsensoren des Fahrerassistenzsystems getestet werden können. Entsprechend können Infrarotsensoren des Fahrerassistenzsystems getestet werden, wenn die Funktionsschicht 503 eine Infrarotlicht- reflektierende Schicht aufweist. Ein Schichtverbund 500 kann beispielsweise eine Funktionsschicht 503 oder eine Vielzahl von Funktionsschichten 503 aufweisen.

**Fig. 6** eine schematische Darstellung eines Dummy-Fahrzeugs 100 gemäß Fig. 1 bei einer Befestigung eines Öffnungselements als Dachpanel 601 gemäß einer beispielhaften Ausführungsform der vorliegenden Erfindung. Das Dummy-Fahrzeug 100 weist ein Paneel, insbesondere ein Dachpaneel 601, auf, welches lösbar mit dem ersten Außenpaneel 110 (und/oder einen beliebigen anderen Außenpaneel 120, 130, 140) derart verbunden ist, dass bei Erhöhung eines Luftdrucks im Innenvolumen des Dummy-Fahrzeugs 100 das Dachpaneel 601 vom zumindest einem der Außenpaneele 110, 120, 130, 140 lösbar ist.

Das Dachpaneel 601 ist mit einem weiteren Verbindungsmittel 602, beispielsweise einem Klettverschluss, einem Sicherheitsreißverschluss, einer Knopfverbindung und/oder einer Hakenverbindung gekoppelt. Somit kann eine gezielte Soll-Öffnung mit dem weiteren Verbindungsmittel 602 integriert werden, sodass bei Vorliegens eines bestimmten Drucks in dem Innenvolumen des Dummy-Fahrzeugs 100 das weitere Verbindungsmittel 602 gelöst wird.

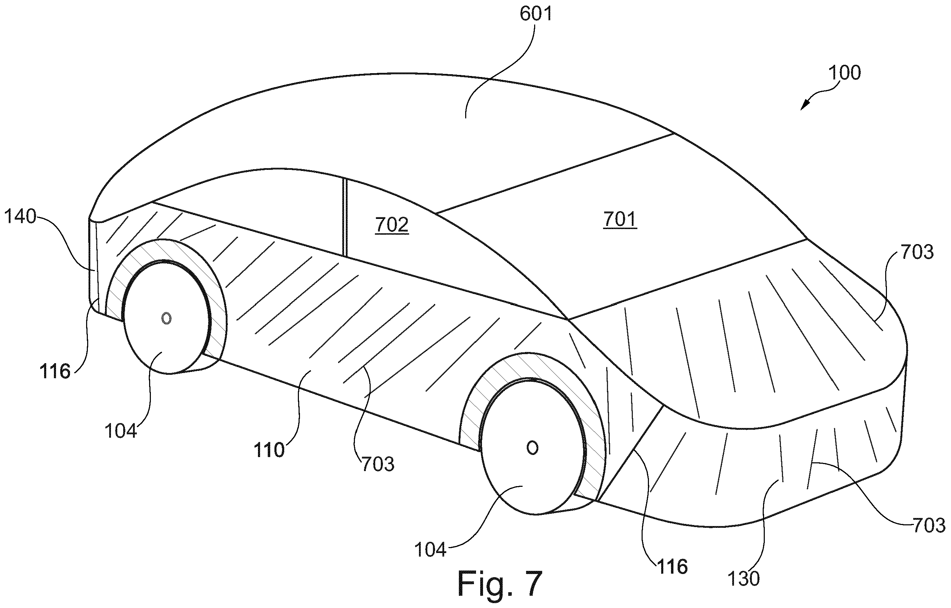

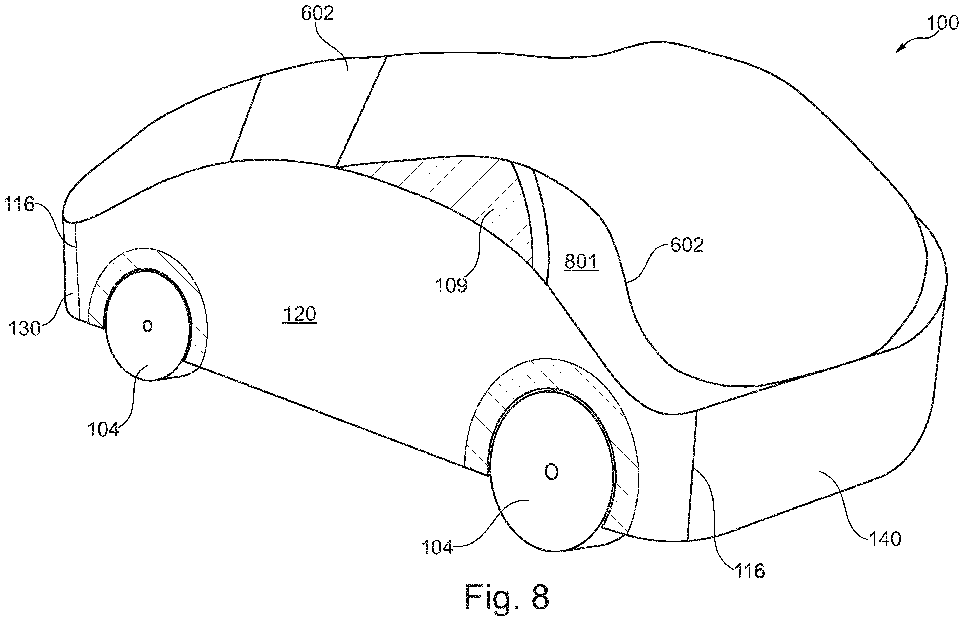

**Fig. 7** eine schematische Darstellung eines Dummy-Fahrzeugs 100 aus Fig. 1 einschließlich eines Dachpaneels 601 in einem unverformten Zustand und **Fig. 8** zeigt eine schematische Darstellung eines Dummy-Fahrzeugs 100 aus Fig. 1 einschließlich eines Dachpaneels 601 in einem verformten Zustand. Aufgrund der Verformung des Dummy-Fahrzeugs 100 nach einem Aufprall verändert sich das Innenvolumen des Dummy-Fahrzeugs 100, sodass es zu einem Überdruck oder einem Unterdruck kommen kann, welcher Komponenten des Dummy-Fahrzeugs zerstören kann. Zudem kann ein entsprechender Unterdruck oder Überdruck die Simulationsergebnisse verfälschen. Aus diesem Grund ist das Dachpaneel 601 derart lösbar mit den Außenpaneelen 110, 120, 130, 140 verbunden, dass eine solche Öffnung bzw. ein Luftspalt 801 bereitgestellt wird. Bei Überschreitens eines Überdrucks von beispielsweise mehr als 1,5 bar, löst sich das Dachpaneel 601, sodass eine Druckausgleichsverbindung 801 zwischen dem Innenvolumen und der Umgebung des Dummy-Fahrzeugs 100 vorliegt. Somit wird insbesondere Beschädigungen aufgrund ungünstiger Druckverhältnisse im Innenvolumen reduziert. Das Paneel 601 kann neben einem Dachpaneel, welches ein Dach eines Dummy-Fahrzeugs 100 bildet, ebenfalls ein Bodenpaneel oder ein Seitenpaneel 110, 120, 130, 140 des Dummy-Fahrzeugs 100 darstellen. Das Dachpaneel 601 kann auch lösbar mit dem Stützpaneel 103, 109 verbunden werden.

Das Dachpaneel 601 ist derart gekoppelt, dass in einem geschlossenen Zustand, indem das Dachpaneel 601 und das Außenpaneel 110, 120 ein Druckausgleich zwischen dem Innenvolumen und der Umgebung des Dummy-Fahrzeugs100 unterbinden, das Außenpaneel 110, 120 und das Dachpaneel 601 eine selbsttragende Struktur ausbilden (Fig. 7), und dass in einem offenen Zustand, indem das Dachpaneel 601 und das Außenpaneel 110, 120 ein Druckausgleich zwischen dem Innenvolumen und der Umgebung des Dummy-Fahrzeugs 100 bereitstellen (Fig. 8), das Außenpaneel 110, 120 und das Dachpaneel 601 eine verformbare Struktur ausbilden.

Fig. 7 zeigt ferner verschiedene Bereiche 701, 702, 703 der Paneele 110, 120, 130, 140, 601, welche verschiedene Funktionsbereiche aufweisen. Beispielsweise weist das Dachpaneel 601 einen Windschutzscheibenbereich 701 auf. Der Windschutzscheibenbereich 701 kann beispielsweise im Vergleich zu den dichtundurchlässigen Umgebungsbereichen einen Licht durchsichtigen und transparenten Bereich aufweisen. Dies ermöglicht zum einen eine realitätsnahe Simulation eines Dummy-Fahrzeugs. Ferner können somit beispielsweise GPS Signale von einem Positionsbestimmungssystem, welches in dem Innenvolumen des Dummy-Fahrzeugs 100 angeordnet sein kann, aus dem Innenvolumen des Dummy-Fahrzeugs 100 störungsfrei hinaus gesendet werden. Entsprechend weist beispielsweise das erste Außenpaneel 110 einen Seitenfensterbereich 702 auf.

Ferner können Radarreflektorbereiche 703 der Paneele 110, 120, 130, 140, 601 mit einer Metallschicht bzw. mit einem metallischen Gewebe ausgestaltet sein, um somit die metallische Karosserie eines Dummy-Fahrzeugs zu simulieren. Dies dienen insbesondere zur realitätsgetreuen Reflektion von Radarstrahlen.

Die Paneele sind beispielsweise mit einem Schichtverbund 500 ausgebildet. Je nach ihrer Funktionalität kann örtlich der Schichtverbund 500 angepasst werden, um somit die entsprechenden Funktionalitäten der Bereichen 701, 702, 703 bereitzustellen.

**Bezugszeichenliste:**

| | | | |
|---|---|---|---|
| 100 | Dummy-Fahrzeug | 500 | Schichtverbund |
| 101 | erster Koppelbereich | 501 | Schaumstoffschicht |
| 102 | zweite Koppelbereich | 502 | Außenschicht |
| 103 | Stützpaneel | 503 | Funktionsschicht |
| 104 | Radabschnitt | 504 | Klebeschicht |
| 105 | Umfangsfläche | | |
| 106 | Eingrenzfläche | 601 | Öffnungselement/Dachpaneel |
| 107 | Nut | 602 | weiteres Verbindungsmittel |
| 108 | Außenfläche | | |
| 109 | weiteres Stützpaneel | 701 | Windschutzscheibenbereich |
| 110 | erstes Außenpaneel | 702 | Seitenfensterbereich |
| 111 | erster Koppelbereich | 703 | Radarreflektorbereich |
| 112 | zweite Koppelbereich | | |
| 113 | Koppelabschnitt | 801 | Luftspalt |
| 114 | Versteifungsstrebe | | |
| 115 | Zugelement | X1 | erster Abstand |
| 116 | Verbindungsmittel | X2 | zweiter Abstand |
| 117 | Funktionselement | | |
| | | | |
| 201 | Verbindungseinrichtung | | |
| 202 | Bodenbereich | | |

## Patentansprüche

1. Dummy-Fahrzeug (100) zum Durchführen von Tests für ein Fahrerassistenzsystem, **gekennzeichnet dadurch**, das Dummy-Fahrzeug (100) aufweisend
ein verformbares erstes Außenpaneel (110), welches zumindest teilweise ein Innenvolumen des Dummy-Fahrzeugs (100) umgibt, und
ein Öffnungselement (601), welches zumindest teilweise das Innenvolumen des Dummy-Fahrzeugs (100) umgibt,
wobei das Öffnungselement (601) und das erste Außenpaneel (110) eine selbstragende Einheit bilden,
wobei das Öffnungselement (601) lösbar mit dem ersten Außenpaneel (110) derart verbunden ist, dass bei Einwirkens einer Aufprallkraft das Öffnungselement (601) vom ersten Außenpaneel (110) lösbar ist, sodass die selbstragende Einheit auflösbar ist und eine Verformung des Fahrzeugs (100) bereitstellbar ist.

2. Dummy-Fahrzeug (100) gemäß Anspruch 1,
wobei das Öffnungselement (601) lösbar mit dem ersten Außenpaneel (110) derart verbunden ist, dass bei Erhöhung eines Luftdrucks im Innenvolumen oder aufgrund einer mechanischen Verformung aufgrund einer Aufprallkraft des Dummy-Fahrzeugs (100) das Öffnungselement (601) vom ersten Außenpaneel (110) lösbar ist, sodass ein Druckausgleich zwischen dem Innenvolumen und der Umgebung des Dummy-Fahrzeugs bereitstellbar ist.

3. Dummy-Fahrzeug (100) gemäß Anspruch 1 oder 2,
wobei das Öffnungselement (601) ein Paneel, insbesondere ein Dachpaneel (601), ausbildet,
wobei das Außenpaneel (110) und das Paneel, insbesondere das Dachpaneel (601), derart gekoppelt sind,
dass in einem geschlossenen Zustand, indem das Paneel und das Außenpaneel (110) ein Druckausgleich zwischen dem Innenvolumen und der Umgebung des Dummy-Fahrzeugs unterbinden, das Außenpaneel (110) und das Paneel eine selbsttragende Struktur ausbilden, und
dass in einem offenen Zustand, indem das Paneel und das Außenpaneel (110) ein Druckausgleich zwischen dem Innenvolumen und der Umgebung des Dummy-Fahrzeugs bereitstellen, das Außenpaneel (110) und das Paneel eine verformbare Struktur ausbilden.

4. Dummy-Fahrzeug (100) gemäß einem der Ansprüche 1 bis 3,
wobei das Öffnungselement (601) mit einem Sicherheitsreißverschluss lösbar befestigt ist, oder
wobei das Öffnungselement (601) mit einem Klettverschluss, einer Knopfverbindung und/oder einer Hakenverbindung an dem ersten Außenpaneel (110) lösbar befestigt ist.

5. Dummy-Fahrzeug (100) gemäß einem der Ansprüche 1 bis 4, ferner aufweisend
ein elastisch verformbares Stützpaneel (103), welches im Innenvolumen des Dummy-Fahrzeugs (100) angeordnet ist,
wobei das Stützpaneel (103) einen ersten Koppelbereich und einen von dem ersten Koppelbereich beabstandeten zweiten Koppelbereich (102) aufweist,
wobei der erste Koppelbereich (101) und der zweite Koppelbereich (102) derart mit dem ersten Außenpaneel (110) gekoppelt sind, dass bei Veränderung eines ersten Abstands (x1) zwischen dem ersten Koppelbereich (101) und dem zweiten Koppelbereich (102) das Stützpaneel (103) vorspannbar ist,
wobei der erste Koppelbereich (101) und der zweite Koppelbereich (102) insbesondere derart mit dem ersten Außenpaneel (110) gekoppelt sind, dass bei Vorliegens des ersten Abstands (x1) das Stützpaneel (103) in einer gewölbten Profilform vorliegt, und/oder
wobei das erste Außenpaneel (110) eine Verbindungseinrichtung (201) aufweist, in welcher der erste Koppelbereich (101) oder der zweite Koppelbereich (102) befestigbar ist,
wobei die Verbindungseinrichtung (201) insbesondere als Aufnahmeöffnung, insbesondere als Schlitz, in dem ersten Außenpaneel (110) derart ausgebildet ist, dass der erste Koppelbereich (101) oder der zweite Koppelbereich (102) in die Aufnahmeöffnung einsteckbar ist,
wobei insbesondere der erste Koppelbereich (101) und/oder der zweite Koppelbereich (102) eine größere Paneeldicke aufweist als ein Paneelbereich des Stützpaneels (103) zwischen dem der ersten Koppelbereich (101) und dem zweiten Koppelbereich (102),
wobei das Stützpaneel (103) insbesondere derart ausgebildet ist, dass bei Vorliegens des ersten Abstands (x1) das Stützpaneel (103) vorgespannt ist,
wobei das Stützpaneel (103) insbesondere einen Auflagebereich zur Auflage auf einem Boden aufweist,
wobei der Auflagebereich derart ausgebildet ist, dass eine Gewichtskraft des ersten Außenpaneels (110) und des Stützpaneels (103) auf den Boden übertragbar ist,
wobei insbesondere das erste Außenpaneel (110) derart ausgebildet ist, dass bei Auflage des Stützpaneels (103) auf dem Boden das erste Außenpaneel (110) frei von einer kraftübertragenden Kopplung mit dem Boden ist.

6. Dummy-Fahrzeug (100) gemäß einem der Ansprüche 1 bis 5,
wobei das Außenpanel aus einem Schichtverbund (500) ausgebildet ist,
wobei der Schichtverbund (500) insbesondere eine verformbare Schaumstoffschicht (501) aufweist, welche mit einer Innenseite das Innenvolumen des Dummy-Fahrzeugs (100) zumindest teilweise umgibt, und/oder
wobei der Schichtverbund (500) insbesondere eine verformbare Außenschicht (502) aufweist, welche an einer der Innenseite gegenüberliegende Außenseite der Schaumstoffschicht (501) befestigt ist,
wobei die verformbare Außenschicht (502) insbesondere intransparent ist,
wobei die Schaumstoffschicht (501) insbesondere eine Dicke von 20 mm bis 100 mm aufweist, und
wobei die Schaumstoffschicht (501) insbesondere eine Dichte von 15 kg/m³ bis 60 kg/m³ aufweist.
wobei insbesondere zwischen der Schaumstoffschicht (501) und der Außenschicht (502) eine Klebeschicht (504) angeordnet ist.

7. Dummy-Fahrzeug (100) gemäß Anspruch 6,
wobei die Außenschicht (502) einen Reflexionsgrad gegenüber Licht mit einem Spektralbereich von 700nm bis 900 nm, insbesondere Infrarotlicht, zwischen 60% bis 80 % hat.

8. Dummy-Fahrzeug (100) gemäß Anspruch 6 oder 7,
wobei der Schichtverbund (500) ferner eine verformbare Funktionsschicht (503) zwischen der Schaumstoffschicht (501) und der Außenschicht (502) aufweist,
wobei die Funktionsschicht (503) insbesondere eine beheizbare Schicht, eine Schicht aus Metallkomponenten, insbesondere aus metallischem Gewebe, und/oder einer Infrarotlicht-reflektierenden Schicht aufweist.

9. Dummy-Fahrzeug (100) gemäß einem der Ansprüche 1 bis 8,
wobei das erste Außenpaneel (110) einen Radabschnitt aufweist,
wobei der Radabschnitt eine rund verlaufende Nut (107) aufweist, welche einen Radabschnitt (104) des ersten Außenpaneels (110) von einem, den Radabschnitt umgebenden Abschnitt des ersten Außenpaneels (110) abgrenzt,
wobei insbesondere der Radabschnitt (104) eine Umfangsfläche (105) und der umgebenen Abschnitt eine Eingrenzfläche (106) aufweist,
wobei die Umfangsfläche (105) und die Eingrenzfläche (106) gegenüberliegen und mittels der Nut (107) voneinander beabstandet sind,
wobei die Eingrenzfläche (106) insbesondere eine metallische Oberflächenschicht und die Umfangsfläche (105) insbesondere eine lichtabsorbierende Oberflächenschicht, insbesondere eine gummierte Oberflächenschicht, aufweisen,
wobei insbesondere der Radabschnitt (104) eine Außenfläche (108) aufweist, wobei die Außenfläche (108) eine weitere metallische Oberflächenschicht aufweist,
wobei die weitere metallische Oberflächenschicht ein Muster, insbesondere indikativ für eine Anordnung von Felgenspeichen, aufweist.

10. Dummy-Fahrzeug (100) gemäß Anspruch 9,
wobei der Radabschnitt (104) drehbar relativ zu dem ersten Außenpaneel (110) ausgebildet ist.

11. Dummy-Fahrzeug (100) gemäß einem der Ansprüche 1 bis 10, ferner aufweisend
ein verformbares zweites Außenpaneel (120), welches zumindest teilweise das Innenvolumen des Dummy-Fahrzeugs (100) umgibt,
wobei das Öffnungselement (601), das erste Außenpaneel (110) und das zweite Außenpaneel (120) die selbstragende Einheit bilden.
wobei das Öffnungselement (601) lösbar mit dem zweiten Außenpaneel (120) derart verbunden ist, dass bei Einwirkens einer Aufprallkraft das Öffnungselement (601) vom zweiten Außenpaneel (120) lösbar ist, sodass die selbstragende Einheit auflösbar ist und eine Verformung des Fahrzeugs (100) bereitstellbar ist.

12. Dummy-Fahrzeug (100) gemäß Anspruch 11, ferner aufweisend
ein weiteres elastisch verformbares Stützpaneel (109), welches im Innenvolumen des Dummy-Fahrzeugs (100) angeordnet ist,
wobei das weitere Stützpaneel (109) einen weiteren ersten Koppelbereich (111) und einen von dem weiteren ersten Koppelbereich (111) beabstandeten weiteren zweiten Koppelbereich (112) aufweist,
wobei der weiteren erste Koppelbereich (111) und der weitere zweite Koppelbereich (112) derart mit dem zweiten Außenpaneel (120) gekoppelt sind, dass das weitere Stützpaneel (109) in einer weiteren gewölbten Profilform vorliegt, so dass bei Veränderung eines zweiten Abstands (x2) zwischen dem weiteren ersten Koppelbereich (111) und dem weiteren zweiten Koppelbereich (112) das weitere Stützpaneel (109) vorspannbar ist,
wobei das Stützpanel und das weitere Stützpanel in einem Koppelabschnitt (113) miteinander befestigt sind.

13. Dummy-Fahrzeug (100) gemäß Anspruch 11 oder 12, ferner aufweisend
eine Versteifungsstrebe,
wobei die Versteifungsstrebe (114) zwischen dem ersten Außenpaneel (110) und dem zweiten Außenpaneel (120) derart befestigt ist, dass eine Druckkraft auf die Versteifungsstrebe (114) übertragbar ist,
wobei insbesondere zumindest das erste Außenpaneel (110) oder das zweite Außenpaneel (120) eine Aufnahmeöffnung aufweist, in welcher die Versteifungsstrebe (114) lösbar einsteckbar ist.

14. Dummy-Fahrzeug (100) gemäß Anspruch 13, ferner aufweisend
ein Zugelement (115), insbesondere ein elastisches Zugelement (115),
wobei das Zugelement (115) mit dem ersten Außenpaneel (110) und/oder dem zweiten Außenpaneel (120) und der Versteifungsstrebe (114)derart befestigt ist, dass das Zugelement (115) Zugkräfte zwischen dem ersten Außenpaneel (110) und/oder dem zweiten Außenpaneel (120) und der Versteifungsstrebe (114)überträgt.

15. Verfahren zum Durchführen von Tests für ein Fahrerassistenzsystem mit einem Dummy-Fahrzeug (100) gemäß einem der Ansprüche 1 bis 14.

## Claims

1. Dummy-vehicle (100) for performing tests for a driver assistance system,
**characterized in in that**
the dummy-vehicle (100) comprises
a deformable first outer panel (110) which at least partially surrounds an inner volume of the dummy-vehicle (100), and
an opening element (601) which at least partially surrounds the inner volume of the dummy-vehicle (100),
wherein the opening element (601) and the first outer panel (110) form a self-supporting unit,
wherein the opening element (601) is detachably connected to the first outer panel (110) such that, when an impact force is acting, the opening element (601) is detachable from the first outer panel (110), such that the self-supporting unit is suspendable and a deformation of the vehicle (100) is providable.

2. Dummy-vehicle (100) according to claim 1,
wherein the opening element (601) is detachably connected to the first outer panel (110) such that, when an air pressure in the inner volume increases or due to a mechanic deformation due to an impact force of the dummy-vehicle (100), the opening element (601) is detachable from the first outer panel (110), such that a pressure equalization between the inner volume and an ambience of the dummy-vehicle is providable.

3. Dummy-vehicle (100) according to claim 1 or 2,
wherein the opening element (601) forms a panel, in particular a roof panel (601),
wherein the outer panel (110) and the panel, in particular the roof panel (601), are coupled such
that in a closed state, in which the panel and the outer panel (110) prevent a pressure equalization between the inner volume and the ambience of the dummy-vehicle, the outer panel (110) and the panel form a self-supporting structure, and
that in an open state, in which the panel and the outer panel (110) provide a pressure equalization between the inner volume and the ambience of the dummy-vehicle, the outer panel (110) and the panel form a deformable structure.

4. Dummy-vehicle (100) according to one of the claims 1 to 3,
wherein the opening element (601) is detachably attached by a safety zipper, or
wherein the opening element (601) is detachably attached to the first outer panel (110) by a hook-and-loop fastener, a button connection and/or a hook connection.

5. Dummy-vehicle (100) according to one of the claims 1 to 4, further comprising
an elastically deformable supporting panel (103) which is arranged in the inner volume of the dummy-vehicle (100),
wherein the supporting panel (103) comprises a first coupling region and a second coupling region (102) spaced apart from the first coupling region,
wherein the first coupling region (101) and the second coupling region (102) are coupled to the first outer panel (110) such that, when a first distance (x1) between the first coupling region (101) and the second coupling region (102) changes, the supporting panel (103) is preloadable,
wherein the first coupling region (101) and the second coupling region (102) are in particular coupled to the first outer panel (110) such that, when the first distance (x1) is present, the supporting panel (103) has a curved profile shape, and/or
wherein the first outer panel (110) comprises a connecting means (201), in which the first coupling region (101) or the second coupling region (102) is attachable,
wherein the connecting means (201) is configured, in particular as a receiving opening, in particular as a slit, in the first outer panel (110), such that the first coupling region (101) or the second coupling region (102) is insertable in the receiving opening,
wherein in particular the first coupling region (101) and/or the second coupling region (102) comprises a larger panel thickness than a panel region of the supporting panel (103) between the first coupling region (101) and the second coupling region (102),
wherein the supporting panel (103) is in particular configured such that, when the first distance (x1) is present, the supporting panel (103) is preloaded, wherein the supporting panel (103) in particular comprises a bearing region for bearing on a ground,
wherein the bearing region is configured such that a weight force of the first outer panel (110) and the supporting panel (103) is transferable to the ground,
wherein in particular the first outer panel (110) is configured such that, when the supporting panel (103) is bearing on the ground, the first outer panel (110) is free of a force-transferring coupling with the ground.

6. Dummy-vehicle (100) according to one of the claims 1 to 5,
wherein the outer panel is made of a layer composite (500),
wherein the layer composite (500) in particular comprises a deformable foam layer (501) which, with an inner side at least partially surrounds the inner volume of the dummy-vehicle (100), and/or
wherein the layer composite (500) in particular comprises a deformable outer layer (502) which is attached to an outer side of the foam layer (501) which is opposing the inner side,
wherein the deformable outer layer (502) is in particular non-transparent,
wherein the foam layer (501) in particular comprises a thickness of 20 mm to 100 mm, and
wherein the foam layer (501) in particular comprises a density of 15 kg/m³ to 60 kg/m³,
wherein in particular between the foam layer (501) and the outer layer (502) an adhesive layer (504) is arranged.

7. Dummy-vehicle (100) according to claim 6,
wherein the outer layer (502) has a degree of reflection to light with a spectral range from 700 nm to 900 nm, in particular infrared light, between 60% to 80%.

8. Dummy-vehicle (100) according to claim 6 or 7,
wherein the layer composite (500) further comprises a deformable functional layer (503) between the foam layer (501) and the outer layer (502),
wherein the functional layer (503) in particular comprises a heatable layer, a layer made of metal components, in particular made of metallic tissue, and/or an infrared-reflecting layer.

9. Dummy-vehicle (100) according to one of the claims 1 to 8,
wherein the first outer panel (110) comprises a wheel section,
wherein the wheel section comprises a round groove (107) which delimits a wheel section (104) of the first outer panel (110) from a section of the first outer panel (110) which is surrounding the wheel section,
wherein in particular the wheel section (104) comprises a circumferential surface (105) and the surrounding section comprises a delimiting surface (106),
wherein the circumferential surface (105) and the delimiting surface (106) are opposing each other and are spaced from each other by the groove (107),
wherein the delimiting surface (106) in particular comprises a metallic surface layer and the circumferential surface (105) in particular comprises a light absorbing surface layer, in particular a rubberized surface layer,
wherein in particular the wheel section (104) comprises an outer surface (108),
wherein the outer surface (108) comprises a further metallic surface layer,
wherein the further metallic surface layer comprises a pattern, in particular indicative for an arrangement of spokes of rims.

10. Dummy-vehicle (100) according to claim 9,
wherein the wheel section (104) is configured rotatable with respect to the first outer panel (110).

11. Dummy-vehicle (100) according to one of the claims 1 to 10, further comprising
a deformable second outer panel (120) which at least partially surrounds the inner volume of the dummy-vehicle (100),
wherein the opening element (601), the first outer panel (110) and the second outer panel (120) form the self-supporting unit,
wherein the opening element (601) is detachably connected to the second outer panel (120) such that, when an impact force is acting, the opening element (601) is detachable from the second outer panel (120), such that the self-supporting unit is suspendable and a deformation of the vehicle (100) is providable.

12. Dummy-vehicle (100) according to claim 11, further comprising
a further elastically deformable supporting panel (109) which is arranged in the inner volume of the dummy-vehicle (100),
wherein the further supporting panel (109) comprises a further first coupling region (111) and a further second coupling region (112) which is spaced apart from the further first coupling region (111),
wherein the further first coupling region (111) and the further second coupling region (112) are coupled to the second outer panel (120) such that the further supporting panel (109) has a further curved profile in shape, such that, when a second distance (x2) between the further first coupling region (111) and the further second coupling region (112) changes, the further supporting panel (109) is preloadable,
wherein the supporting panel and the further supporting panel are attached to each other in a coupling section (113).

13. Dummy-vehicle (100) according to claim 11 or 12, further comprising
a reinforcing brace,
wherein the reinforcing brace (114) is attached between the first outer panel (110) and the second outer panel (120), such that a pressure force is transferable to the reinforcing brace (114),
wherein in particular at least the first outer panel (110) or the second outer panel (120) comprises a receiving opening, in which the reinforcing brace is detachably insertable.

14. Dummy-vehicle (100) according to claim 13, further comprising
a tension element (115), in particular an elastic tension element (115),
wherein the tension element (115) is attached to the first outer panel (110) and/or the second outer panel (120) and the reinforcing brace (114), such that the tension element (115) transfers tensile forces between the first outer panel (110) and/or the second outer panel (120) and the reinforcing brace (114).

15. Method of performing tests for a driver assistance system with a dummy-vehicle (100) according to one of the claims 1 to 14.

## Revendications

1. Véhicule de test (100) pour la réalisation de tests pour un système d'assistance au conducteur, **caractérisé en ce que** le véhicule de test (100) présente
un premier panneau extérieur (110) déformable qui entoure au moins partiellement un volume intérieur du véhicule de test (100), et
un élément d'ouverture (601) qui entoure au moins partiellement le volume intérieur du véhicule de test (100),
dans lequel l'élément d'ouverture (601) et le premier panneau extérieur (110) forment une unité autoporteuse,
dans lequel l'élément d'ouverture (601) est relié de manière détachable au premier panneau extérieur (110) de telle manière que sous l'effet d'une force d'impact l'élément d'ouverture (601) soit détachable du premier panneau extérieur (110) de sorte que l'unité autoporteuse soit démantelée et une déformation du véhicule (100) puisse être mise à disposition.

2. Véhicule de test (100) selon la revendication 1,
**caractérisé en ce que** l'élément d'ouverture (601) est relié de manière détachable au premier panneau extérieur (110) de telle manière que lors de l'augmentation d'une pression d'air dans le volume intérieur ou en raison d'une déformation mécanique due à une force d'impact du véhicule de test (100) l'élément d'ouverture (601) soit détachable du premier panneau extérieur (110) de sorte qu'une compensation de pression entre le volume intérieur et l'environnement du véhicule de test puisse être mise à disposition.

3. Véhicule de test (100) selon la revendication 1 ou 2,
**caractérisé en ce que** l'élément d'ouverture (601) constitue un panneau, en particulier un panneau de toit (601),
dans lequel le panneau extérieur (110) et le panneau, en particulier le panneau de toit (601), sont couplés de telle manière
que dans un état fermé, dans lequel le panneau et le panneau extérieur (110) évitent une compensation de pression entre le volume intérieur et l'environnement du véhicule de test, le panneau extérieur (110) et le panneau constituent une structure autoporteuse, et
que dans un état ouvert, dans lequel le panneau et le panneau extérieur (110) mettent à disposition une compensation de pression entre le volume intérieur et l'environnement du véhicule de test, le panneau extérieur (110) et le panneau constituent une structure déformable.

4. Véhicule de test (100) selon l'une des revendications 1 à 3,
**caractérisé en ce que** l'élément d'ouverture (601) est fixé de manière détachable avec une fermeture éclair, ou
dans lequel l'élément d'ouverture (601) est fixé de manière détachable avec une fermeture autoagrippante, une liaison à bouton et/ou une liaison à crochet au premier panneau extérieur (110).

5. Véhicule de test (100) selon l'une des revendications 1 à 4, présentant de plus
un panneau d'appui (103) déformable élastiquement qui est agencé dans le volume intérieur du véhicule de test (100),
**caractérisé en ce que** le panneau d'appui (103) présente une première zone de couplage et une seconde zone de couplage (102) espacée de la première zone de couplage, dans lequel la première zone de couplage (101) et la seconde zone de couplage (102) sont couplées au premier panneau extérieur (110) de telle manière que lors de la modification d'une première distance (x1) entre la première zone de couplage (101) et la seconde zone de couplage (102) le panneau d'appui (103) soit précontraint,
dans lequel la première zone de couplage (101) et la seconde zone de couplage (102) sont couplées en particulier au premier panneau extérieur (110) de telle manière qu'en présence de la première distance (x1) le panneau d'appui (103) se présente sous une forme profilée courbée, et/ou
dans lequel le premier panneau extérieur (110) présente un dispositif de liaison (201) dans lequel la première zone de couplage (101) ou la seconde zone de couplage (102) peut être fixée,
dans lequel le dispositif de liaison (201) est constitué en particulier comme ouverture de réception, en particulier comme fente, dans le premier panneau extérieur (110) de telle manière que la première zone de couplage (101) ou la seconde zone de couplage (102) puisse être enfichée dans l'ouverture de réception,
dans lequel en particulier la première zone de couplage (101) et/ou la seconde zone de couplage (102) présente une épaisseur de panneau plus grande qu'une zone de panneau du panneau d'appui (103) entre la première zone de couplage (101) et la seconde zone de couplage (102),
dans lequel le panneau d'appui (103) est constitué en particulier de telle manière qu'en cas de présence de la première distance (x1) le panneau d'appui (103) soit précontraint,
dans lequel le panneau d'appui (103) présente en particulier une zone de support pour le support sur un sol,
dans lequel la zone de support est constituée de telle manière qu'une force du premier panneau extérieur (110) et du panneau d'appui (103) puisse être transmise au sol,
dans lequel en particulier le premier panneau extérieur (110) est constitué de telle manière que lors du support du panneau d'appui (103) sur le sol le premier panneau extérieur (110) soit exempt d'un couplage transmettant la force avec le sol.

6. Véhicule de test (100) selon l'une des revendications 1 à 5,
**caractérisé en ce que** le panneau extérieur est constitué en un composite stratifié (500),
dans lequel le composite stratifié (500) présente en particulier une couche de substance expansée (501) déformable qui entoure au moins partiellement avec un côté intérieur le volume intérieur du véhicule de test (100), et/ou
dans lequel le composite stratifié (500) présente en particulier une couche extérieure (502) déformable qui est fixée à un côté extérieur opposé au côté intérieur de la couche de substance expansée (501),
dans lequel la couche extérieure (502) déformable est en particulier non transparente,
dans lequel la couche de substance expansée (501) présente en particulier une épaisseur de 20 mm à 100 mm, et
dans lequel la couche de substance expansée (501) présente en particulier une épaisseur de 15 kg/m³ à 60 kg/m³,
dans lequel en particulier une couche de colle (504) est agencée entre la couche de substance expansée (501) et la couche extérieure (502).

7. Véhicule de test (100) selon la revendication 6,
**caractérisé en ce que** la couche extérieure (502) présente un degré de réflexion par rapport à la lumière avec une plage spectrale de 700 nm à 900 nm, en particulier une lumière infrarouge, entre 60 % et 80 %.

8. Véhicule de test (100) selon la revendication 6 ou 7,
**caractérisé en ce que** le composite stratifié (500) présente de plus une couche fonctionnelle (503) déformable entre la couche de substance expansée (501) et la couche extérieure (502),
dans lequel la couche fonctionnelle (503) présente en particulier une couche chauffable, une couche de composants métalliques, en particulier de tissu métallique, et/ou d'une couche réfléchissant une lumière infrarouge.

9. Véhicule de test (100) selon l'une des revendications 1 à 8,
**caractérisé en ce que** le premier panneau extérieur (110) présente une section de roue,
dans lequel la section de roue présente une rainure (107) s'étendant en rond qui délimite une section de roue (104) du premier panneau extérieur (110) d'une section entourant la section de roue du premier panneau extérieur (110),
dans lequel en particulier la section de roue (104) présente une surface périphérique (105) et la section entourée présente une surface de délimitation (106),
dans lequel la surface périphérique (105) et la surface de délimitation (106) se font face et sont espacées au moyen de la rainure (107) l'une de l'autre,
dans lequel la surface de délimitation (106) présente en particulier une couche de surface métallique et la surface périphérique (105) présente en particulier une couche de surface absorbant la lumière, en particulier une couche de surface caoutchoutée,
dans lequel en particulier la section de roue (104) présente une surface extérieure (108),
dans lequel la surface extérieure (108) présente une autre couche de surface métallique,
dans lequel l'autre couche de surface métallique présente un motif, en particulier indicateur pour un agencement de rayons de jante.

10. Véhicule de test (100) selon la revendication 9,
**caractérisé en ce que** la section de roue (104) est constituée de manière rotative par rapport au premier panneau extérieur (110).

11. Véhicule de test (100) selon l'une des revendications 1 à 10, présentant de plus
un second panneau extérieur déformable (120) qui entoure au moins partiellement le volume intérieur du véhicule de test (100),
**caractérisé en ce que** l'élément d'ouverture (601), le premier panneau extérieur (110) et le second panneau extérieur (120) forment l'unité autoporteuse,
dans lequel l'élément d'ouverture (601) est relié de manière détachable au second panneau extérieur (120) de telle manière que sous l'effet d'une force d'impact l'élément d'ouverture (601) soit détachable du second panneau extérieur (120) de sorte que l'unité autoporteuse puisse être démantelée et une déformation du véhicule (100) puisse être mise à disposition.

12. Véhicule de test (100) selon la revendication 11, présentant de plus
un autre panneau d'appui (109) déformable élastiquement qui est agencé dans le volume intérieur du véhicule de test (100),
**caractérisé en ce que** l'autre panneau d'appui (109) présente une autre première zone de couplage (111) et une autre seconde zone de couplage (112) espacée de l'autre première zone de couplage (111),
dans lequel l'autre première zone de couplage (111) et l'autre seconde zone de couplage (112) sont couplées au second panneau extérieur (120) de telle manière que l'autre panneau d'appui (109) se présente sous une autre forme profilée courbée de sorte que lors de la modification d'une seconde distance (x2) entre l'autre première zone de couplage (111) et l'autre seconde zone de couplage (112) l'autre panneau d'appui (109) puisse être précontraint,
dans lequel le panneau d'appui et l'autre panneau d'appui sont fixés entre eux dans une section de couplage (113).

13. Véhicule de test (100) selon la revendication 11 ou 12, présentant de plus
une entretoise de renforcement,
**caractérisé en ce que** l'entretoise de renforcement (114) est fixée entre le premier panneau extérieur (110) et le second panneau extérieur (120) de telle manière qu'une force de pression puisse être transmise à l'entretoise de renforcement (114),
dans lequel en particulier au moins le premier panneau extérieur (110) ou le second panneau extérieur (120) présente une ouverture de réception, dans laquelle l'entretoise de renforcement (114) peut être enfichée de manière détachable.

14. Véhicule de test (100) selon la revendication 13, présentant de plus
un élément de traction (115), en particulier un élément de traction élastique (115), **caractérisé en ce que** l'élément de traction (115) est fixé au premier panneau extérieur (110) et/ou au second panneau extérieur (120) et à l'entretoise de renforcement (114) de telle manière que l'élément de traction (115) transmette des forces de traction entre le premier panneau extérieur (110) et/ou le second panneau extérieur (120) et l'entretoise de renforcement (114).

15. Procédé de réalisation de tests pour un système d'assistance au conducteur avec un véhicule de test (100) selon l'une des revendications 1 à 14.
